# EUROPEAN PATENT APPLICATION

(11) **EP 4 765 652 A1**
(43) Date of publication of application: **24.06.2026**
(21) Application number: 25223404.2
(22) Date of filing: 15.12.2025
(51) Int. Cl.: H04B 1/00

(54) **RADIO FREQUENCY SYSTEM AND ELECTRONIC DEVICE**

(30) Priority: 18.12.2024 CN 202411880094
(71) Applicant: GUANGDONG OPPO MOBILE TELECOMMUNICATIONS CORP., LTD., Dongguan, Guangdong 523860 (CN)
(72) Inventor: ZHANG, Ting, No.18 Haibin Road Wusha,Chang'an Dongguan,Guangdon, 523860 (CN); LI, Mingcheng, No.18 Haibin Road Wusha,Chang'an Dongguan,Guangdon, 523860 (CN); YUN, Xiaofan, No.18 Haibin Road Wusha,Chang'an Dongguan,Guangdon, 523860 (CN); TONG, Lin, No.18 Haibin Road Wusha,Chang'an Dongguan,Guangdon, 523860 (CN); FENG, Bin, No.18 Haibin Road Wusha,Chang'an Dongguan,Guangdon, 523860 (CN)
(74) Representative: Grassi, Stefano

(57) **Abstract**

The disclosure provides a RF system and an electronic device. The RF system includes first and second RF transceiver modules, first and second switch units, a first front-end circuit, first and second filters, and first and second antenna radiators. The first and second RF transceiver modules are respectively configured for transmission and receipt a first network signal of a first frequency band and a second network signal of a second frequency band. Two selection terminals of the first switch unit are electrically connected to the first and second RF transceiver modules respectively. The first front-end circuit is electrically connected between the first switch unit and the first filter, and between the first switch unit and the second filter. The first antenna radiator is electrically connected to the other terminal of the first filter. The second antenna radiator is electrically connected to the other terminal of the second filter. According to the disclosure, the architecture of the RF system can be simplified and the size of the RF system can be reduced, while supporting multiple network signals.

## Description

### TECHNICAL FIELD

The disclosure relates to the field of communication technologies, and in particular to a radio frequency system and an electronic device.

### BACKGROUND

With the development of communication functions of electronic devices, electronic devices can support various network signals of different communication standards. To support these network signals, the radio frequency (RF) system in the electronic device needs to be provided with more transmitting and receiving channels. However, the space in the electronic device is limited, especially on the main board. Therefore, a key technical problem to be solved is how to simplify the architecture of the RF system and reduce the space occupied by the RF system while supporting various network signals.

### SUMMARY

Embodiments of the disclosure provide a RF system that can simplify the architecture of the RF system and reduce the space occupied by the RF system while supporting various network signals, and provides an electronic device having the RF system. The invention is set out in the appended set of claims.

The RF system provided by the disclosure includes the first RF transceiver module, the second RF transceiver module, the first switch unit, the first front-end circuit, the second switch unit, the first filter, the second filter, the first antenna radiator, and the second antenna radiator. The first RF transceiver module is configured for transmission and receipt of the first network signal of the first frequency band, and the second RF transceiver module is configured for transmission and receipt of the second network signal of the second frequency band. Two selection terminals of the first switch unit are electrically connected to the first RF transceiver module and the second RF transceiver module respectively, and one terminal of the first front-end circuit is electrically connected to the fixed terminal of the first switch unit. One terminal of the second switch unit is electrically connected to the other terminal of the first front-end circuit, and one terminal of the first filter is electrically connected to the first selection terminal of the second switch unit. The first filter is configured to allow the first network signal of the first frequency band to pass through. One terminal of the second filter is electrically connected to the second selection terminal of the second switch unit, and the second filter is configured to allow the second network signal of the second frequency band to pass through. The first antenna radiator is electrically connected to the other terminal of the first filter. The second antenna radiator is electrically connected to the other terminal of the second filter. When the first switch unit makes the first RF transceiver module and the first front-end circuit conductively connected, the first front-end circuit amplifies the first network signal of the first frequency band and sends it to the first antenna radiator, so that the first antenna radiator is configured to transmit and receive the first network signal of the first frequency band. When the second switch unit makes the second RF transceiver module and the first front-end circuit conductively connected, the first front-end circuit amplifies the second network signal of the second frequency band and sends it to the second antenna radiator, so that the second antenna radiator is configured to transmit and receive the second network signal of the second frequency band. Thus, the RF system can reuse the first front-end circuit while supporting multiple network signals, which simplifies the architecture of the RF system and reduces the space occupied by the RF system.

### BRIEF DESCRIPTION OF THE DRAWINGS

To more clearly illustrate the technical solutions of the embodiments of the disclosure, the drawings used in the embodiments are briefly described below.
FIG. 1 is a schematic structural diagram of an electronic device according to some embodiments of the disclosure.
FIG. 2 is a schematic explosion structural diagram of the electronic device according to some embodiments of the disclosure.
FIG. 3 is a first schematic framework diagram of a RF system according to some embodiments of the disclosure.
FIG. 4 illustrates a first frequency response curve of a first power amplifier according to some embodiments of the disclosure.
FIG. 5 is a second schematic framework diagram of the RF system according to some embodiments of the disclosure.
FIG. 6 is a third schematic framework diagram of the RF system according to some embodiments of the disclosure.
FIG. 7 is a fourth schematic framework diagram of the RF system according to some embodiments of the disclosure.
FIG. 8 illustrates a second frequency response curve of the first power amplifier according to some embodiments of the disclosure.
FIG. 9 is a fifth schematic framework diagram of the RF system according to some embodiments of the disclosure.
FIG. 10 illustrates a frequency response curve of a second power amplifier according to some embodiments of the disclosure.
FIG. 11 is a sixth schematic framework diagram of the RF system according to some embodiments of the disclosure.
FIG. 12 is a seventh schematic framework diagram of the RF system according to some embodiments of the disclosure.
FIG. 13 is an eighth schematic framework diagram of the RF system according to some embodiments of the disclosure.
FIG. 14 is a schematic framework diagram illustrating reuse of a first sub-radiator by a first combiner according to some embodiments of the disclosure.
FIG. 15 is a schematic framework diagram illustrating reuse of a second sub-radiator by a second combiner according to some embodiments of the disclosure.
FIG. 16 is a schematic framework diagram illustrating reuse of a third sub-radiator by a third combiner according to some embodiments of the disclosure.
FIG. 17 is a schematic framework diagram illustrating reuse of a fourth sub-radiator by a fourth combiner according to some embodiments of the disclosure.
FIG. 18 is a ninth schematic framework diagram of the RF system according to some embodiments of the disclosure.
FIG. 19 is a tenth schematic framework diagram of the RF system according to some embodiments of the disclosure.
FIG. 20 is an eleventh schematic framework diagram of the RF system according to some embodiments of the disclosure.
FIG. 21 is a twelfth schematic framework diagram of the RF system according to some embodiments of the disclosure.
FIG. 22 is a thirteenth schematic framework diagram of the RF system according to some embodiments of the disclosure.
FIG. 23 is a fourteenth schematic framework diagram of the RF system according to some embodiments of the disclosure.
FIG. 24 is a fifteenth schematic framework diagram of the RF system according to some embodiments of the disclosure.
FIG. 25 is a sixteenth schematic framework diagram of the RF system according to some embodiments of the disclosure.
FIG. 26 is a seventeenth schematic framework diagram of the RF system according to some embodiments of the disclosure.
FIG. 27 is an eighteenth schematic framework diagram of the RF system according to some embodiments of the disclosure.
FIG. 28 is a nineteenth schematic framework diagram of the RF system according to some embodiments of the disclosure.

### DETAILED DESCRIPTION OF PREFERRED EMBODIMENTS

The technical solutions in the embodiments of the disclosure will be described clearly and comprehensively with reference to the drawings. Apparently, the described embodiments are only a part of the embodiments of the disclosure, not all of the embodiments. All other embodiments obtained by a person skilled in the art based on the embodiments of the disclosure without creative efforts shall fall within the protection scope of the disclosure.

The terms "embodiment" referred to herein means that a particular feature, structure, or characteristic described in conjunction with the embodiment may be contained in at least one embodiment of the disclosure. The term used in various places in the specification does not necessarily refer to the same embodiment, nor does it refer to an independent or alternative embodiment that is mutually exclusive with other embodiments. It is explicitly and implicitly understood by a person skilled in the art that an embodiment described herein may be combined with other embodiments.

The terms "first", "second" and the like used in the specification and the claims of the disclosure and the drawings are used to distinguish different objects rather than describe a particular order. Additionally, the terms "include", "comprise", and "have" as well as variations thereof are intended to cover non-exclusive inclusion. For example, an assembly or device including one or more components is not limited to the listed one or more components, but optionally includes one or more components that are not listed but inherent to the illustrated product, or one or more components that should be included based on the described function.

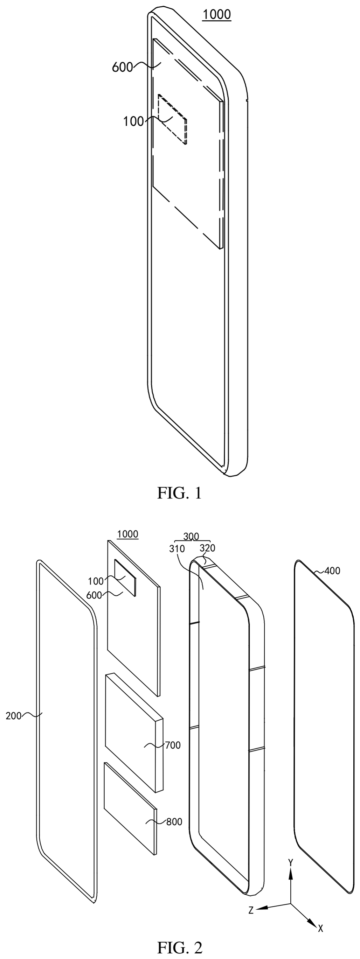

Referring to FIG. 1, FIG. 1 is a schematic structural diagram of an electronic device 1000 according to some embodiments of the disclosure. The electronic device 1000 includes but is not limited to a mobile phone, a tablet computer, a notebook computer, a computer, a wearable device, a drone, a robot, a digital camera, and other devices with a communication function. The embodiments of the disclosure are described by taking a mobile phone as an example, and other electronic devices can refer to the embodiments.

Referring to FIG. 2, FIG. 2 is a schematic explosion structural diagram of the electronic device 1000 according to some embodiments of the disclosure. An operating environment of a RF system 100 is illustrated by taking a case where the electronic device 1000 is a mobile phone as an example. The electronic device 1000 includes a display screen 200, a middle frame 300, and a back cover 400 sequentially arranged along a thickness direction of the electronic device 1000. The middle frame 300 includes a middle plate 310 and a frame 320 provided along a periphery of the middle plate 310. The frame 320 is conductive, for example, the frame 320 is a metal frame. An accommodating space is defined between the display screen 200 and the middle plate 310, and another accommodating space is between the middle plate 310 and the back cover 400. The accommodating spaces are configured to accommodate devices such as a main board 600, a camera module, a receiver module, a battery 700, a sub-board 800, and various sensors. One side of the frame 320 along the thickness direction surrounding an edge of the display screen 200, and the other side of the frame 320 along the thickness direction surrounds an edge of the back cover 400, thereby forming a complete appearance structure of the electronic device 1000. In these embodiments, the frame 320 and the middle plate 310 form an integrated structure, and the frame 320 and the back cover 400 are separate structures. The above operating environment of the RF system 100 is described by taking a mobile phone as an example, however, the RF system 100 of the disclosure is not limited to be applied in the above operating environment.

The structure of the RF system 100 will be illustrated below with reference to the drawings.

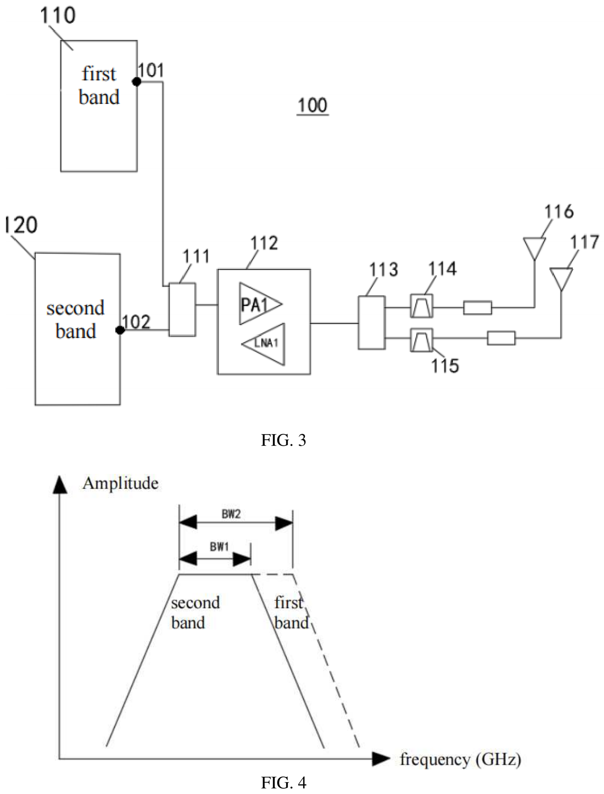

Referring to FIG. 3, the RF system 100 includes a first RF transceiver module 110, a second RF transceiver module 120, a first switch unit 111, a first front-end circuit 112, a second switch unit 113, a first filter 114, a second filter 115, a first antenna radiator 116, and a second antenna radiator 117.

In some alternative implementations, the first RF transceiver module 110 is a RF transceiver.

The first RF transceiver module 110 includes a transmitter and a receiver. Specifically, the transmitter is configured to transform a baseband modulated signal to a RF signal through processes such as up-conversion, amplification, and filtering, and then transmit the processed signal through an antenna radiator. The receiver is configured to receive a weak RF signal in space through an antenna, and then obtain a baseband signal through processes such as filtering, amplification, and down-conversion, and finally send the baseband signal to a demodulation module for demodulation.

Referring to FIG. 3, the first RF transceiver module 110 is configured for transmission and receipt of a first network signal of a first frequency band. Specifically, a signal transceiver port of the first RF transceiver module 110 includes a first port 101.

Signals transmitted and received by the first port 101 include the first network signal of the first frequency band.

The first network signal includes but is not limited to a cellular mobile network signal. In some alternative implementations, the first network signal includes but is not limited to a 2G, 3G, 4G, 5G, or 6G signal.

The second network signal includes but is not limited to a short-range network signal. In some alternative implementations, the second network signal includes but is not limited to a Wi-Fi signal, a Bluetooth signal, an NFC signal, or a UWB signal.

The first frequency band includes but is not limited to at least one of a low band (LB), a mid band (MB), a high band (HB), and an ultra high band (UHB).

When the second network signal is the Wi-Fi signal, the second frequency band includes but is not limited to a Wi-Fi 2.4G band, a Wi-Fi 5G band, or a Wi-Fi 6G band.

Referring to FIG. 3, the second RF transceiver module 120 is configured for transmission and receipt of a second network signal of a second frequency band. Specifically, a signal transceiver port of the second RF transceiver module 120 includes a second port 102. Signals transmitted and received by the second port 102 include the second network signal of the second frequency band.

Two selection terminals of the first switch unit 111 are electrically connected to the first RF transceiver module 110 and the second RF transceiver module 120 respectively. Specifically, the two selection terminals of the first switch unit 111 are electrically connected to the first port 101 and the second port 102 respectively.

One terminal of the first front-end circuit 112 is electrically connected to a fixed terminal of the first switch unit 111.

Specifically, the first front-end circuit 112 is also referred to as a RF front-end circuit that is connected between the RF transceiver module and an antenna radiator. The first front-end circuit 112 includes at least one transmitting channel and at least one receiving channel.

For a group of the transmitting channel and the receiving channel, the transmitting channel of the first front-end circuit 112 includes a first power amplifier PA1 and a first filter 114/first duplexer. Apparently, the first filter 114/first duplexer may be configured outside the transmitting channel of the first front-end circuit 112. The receiving channel of the first front-end circuit 112 includes a first low noise amplifier LNA1. The first front-end circuit 112 further includes components such as a transmit-receive transfer switch. One terminal of the transmit-receive transfer switch is electrically connected to the first antenna radiator 116, and the other terminal of the transmit-receive transfer switch may be switched to electrically connected to either the transmitting channel or the receiving channel of the first front-end circuit 112.

The first power amplifier PA1 is configured to amplify a signal in the transmitting channel of the first front-end circuit 112. The first filter 114 is configured to filter a RF signal in the transmitting channel and the receiving channel of the first front-end circuit 112 in a time division duplex (TDD) mode. The first low noise amplifier LNA1 is configured to amplify a signal in the receiving channel of the first front-end circuit 112. The first duplexer of the first front-end circuit 112 is configured for a duplex operation in a frequency division duplex (FDD) mode of the first front-end circuit 112, and used to filter a signal in the transmitting/receiving channel. The first transmit-receive transfer switch is configured to perform switching between the receiving channel and the transmitting channel of the first front-end circuit 112.

Furthermore, in some alternative implementations, the first power amplifier PA1 may be configured to perform power amplification on multiple frequency bands. For example, the first power amplifier PA1 is an HB power amplifier, which may perform power amplification on frequency bands such as B7 band, N40 band, N41 band, B40 band, B38 band, and B41 band. For the TDD mode, each frequency band is configured with a respective first filter 114. For the FDD system, each frequency band is configured with a respective first duplexer. For example, operating frequency bands of the first power amplifier PA1 includes four frequency bands: B7 band, B40 band, N41 band, and B38 band. A band selection switch is then connected to the first power amplifier PA1. The band selection switch has four selection terminals, which are electrically connected to a duplexer for B7 band, a filter for B40 band, a filter for N41 band, and a filter for B38 band respectively. The duplexer for B7 band, the filter for B40 band, the filter for N41 band, and the filter for B38 band are in turn electrically connected to the first antenna radiator 116 through a first antenna switch, so that the RF system 100 may support B7 band, B40 band, N41 band, or B38 band.

In some other embodiments, when the first front-end circuit 112 includes multiple first power amplifiers PA1, the multiple first power amplifiers PA1 are respectively an HB power amplifier, an MB power amplifier, an LB power amplifier, a UHB power amplifier, etc. A transmitting path where the MB power amplifier, the LB power amplifier, or the UHB power amplifier is located may refer to the relevant content of the aforementioned transmitting path where the HB power amplifier is located.

One terminal of the second switch unit 113 is electrically connected to the other terminal of the first front-end circuit 112. Two selection terminals of the second switch unit 113 are connected to the first filter 114 and the second filter 115 respectively.

One terminal of the first filter 114 is electrically connected to a first selection terminal of the second switch unit 113. The first filter 114 is configured to allow the first network signal of the first frequency band to pass through. The first filter 114 is a band-pass filter. A passband of the first filter 114 includes the first frequency band.

For example, the first frequency band is a UHB band. The first filter 114 is configured to allow the cellular mobile signal of the UHB band to pass through.

One terminal of the second filter 115 is electrically connected to a second selection terminal of the second switch unit 113. The second filter 115 is configured to allow the second network signal of the second frequency band to pass through. The second filter 115 is a band-pass filter. A passband of the second filter 115 includes the second frequency band. The second filter 115 is arranged in parallel with the first filter 114.

For example, the second frequency band is a Wi-Fi 2.4G band. The second filter 115 is configured to allow the Wi-Fi 2.4G band to pass through.

The first antenna radiator 116 is electrically connected to the other terminal of the first filter 114. The first antenna radiator 116 is configured to transmit and receive the first network signal of the first frequency band.

The second antenna radiator 117 is electrically connected to the other terminal of the second filter 115. The second antenna radiator 117 is configured to transmit and receive the second network signal of the second frequency band.

When the first switch unit 111 makes the first port 101 of the first RF transceiver module 110 and the first front-end circuit 112 conductively connected, the first network signal of the first frequency band sent from the first port 101 of the first RF transceiver module 110 is amplified through the transmitting path of the first front-end circuit 112, and then sent to the first antenna radiator 116 after passing through the second switch unit 113 and the first filter 114, so that the first antenna radiator 116 transmits the first network signal of the first frequency band. In this case, the first antenna radiator 116 further receives the first network signal of the first frequency band, and the received signal is sent to the first RF transceiver module 110 after passing through the first filter 114, the second switch unit 113, and the receiving channel of the first front-end circuit 112.

When the first switch unit 111 makes the second RF transceiver module 120 and the first front-end circuit 112 conductively connected, the second network signal of the second frequency band sent from the second port 102 of the second RF transceiver module 120 is amplified through the first front-end circuit 112, and then sent to the second antenna radiator 117 after passing through the second switch unit 113 and the second filter 115, so that the second antenna radiator 117 transmits the second network signal of the second frequency band. In this case, the second antenna radiator 117 further receives the second network signal of the second frequency band, and the received signal is sent to the second RF transceiver module 120 after passing through the second filter 115, the second switch unit 113, and the receiving channel of the first front-end circuit 112.

As can be seen from the above, in these embodiments, the first network signal and the second network signal of different communication standards can be transmitted and received. These two types of network signals reuse the first front-end circuit 112. Compared with configuring one first front-end circuit 112 for each type of network signal, the number of the first front-end circuits 112 can be reduced, thereby reducing the number of components of the first front-end circuit 112 and the area occupied by the components, while supporting both of the first network signal and the second network signal.

In some alternative implementations, there may be one or more first antenna radiator 116. When there are multiple first antenna radiators 116, the first antenna switch is electrically connected between the multiple first antenna radiators 116 and the first filter 114. The first network signal of the first frequency band (such as N41 band) output from the first filter 114 may be switched, through the first antenna switch, to a first antenna radiators 116 at a different position for transmission, thereby obtaining a stronger signal strength. Further, the first antenna switch may further make a first antenna radiators 116 at a different position switched for receipt of the first network signal of the first frequency band (such as N41 band), so as to receive at a stronger signal strength, thereby improving the Internet experience. In other words, the RF system 100 can support single-input single-output of the first network signal of the first frequency band (such as N41 band), and also can support multiple-input multiple-output.

The number of the second antenna radiators 117 may also be designed with reference to the number of the first antenna radiators 116.

The RF system 100 provided by the embodiments of the disclosure includes the first RF transceiver module 110, the second RF transceiver module 120, the first switch unit 111, the first front-end circuit 112, the second switch unit 113, the first filter 114, the second filter 115, the first antenna radiator 116, and the second antenna radiator 117. The first RF transceiver module 110 is configured for transmission and receipt of the first network signal of the first frequency band, and the second RF transceiver module 120 is configured for transmission and receipt of the second network signal of the second frequency band. Two selection terminals of the first switch unit 111 are electrically connected to the first RF transceiver module 110 and the second RF transceiver module 120 respectively. One terminal of the first front-end circuit 112 is electrically connected to the fixed terminal of the first switch unit 111, and one terminal of the second switch unit 113 is electrically connected to the other terminal of the first front-end circuit 112. One terminal of the first filter 114 is electrically connected to the first selection terminal of the second switch unit 113, and the first filter 114 is configured to allow the first network signal of the first frequency band to pass through. One terminal of the second filter 115 is electrically connected to the second selection terminal of the second switch unit 113, and the second filter 115 is configured to allow the second network signal of the second frequency band to pass through. The first antenna radiator 116 is electrically connected to the other terminal of the first filter 114, and the second antenna radiator 117 is electrically connected to the other terminal of the second filter 115. When the first switch unit 111 makes the first RF transceiver module 110 and the first front-end circuit 112 conductively connected, the first front-end circuit 112 amplifies the first network signal of the first frequency band and sends it to the first antenna radiator 116, so that the first antenna radiator 116 is configured to transmit and receive the first network signal of the first frequency band. When the second switch unit 113 makes the second RF transceiver module 120 and the first front-end circuit 112 conductively connected, the first front-end circuit 112 amplifies the second network signal of the second frequency band and sends it to the second antenna radiator 117, so that the second antenna radiator 117 is configured to transmit and receive the second network signal of the second frequency band. Thus, the RF system 100 can support multiple network signals by reusing the first front-end circuit 112, which simplifies the architecture of the RF system 100 and reduces the space occupied by the RF system 100.

As mentioned above, referring to FIG. 3 and FIG. 4, the first front-end circuit 112 includes the first power amplifier PA1. A frequency response range of the first power amplifier PA1 covers the first frequency band and the second frequency band, so that the first power amplifier PA1 may amplify the first network signal of the first frequency band and the second network signal of the second frequency band, which facilitates the first network signal and the second network signal to reuse the first power amplifier PA1.

In these embodiments, the first power amplifier PA1 is configured to amplify the first network signal and/or the second network signal.

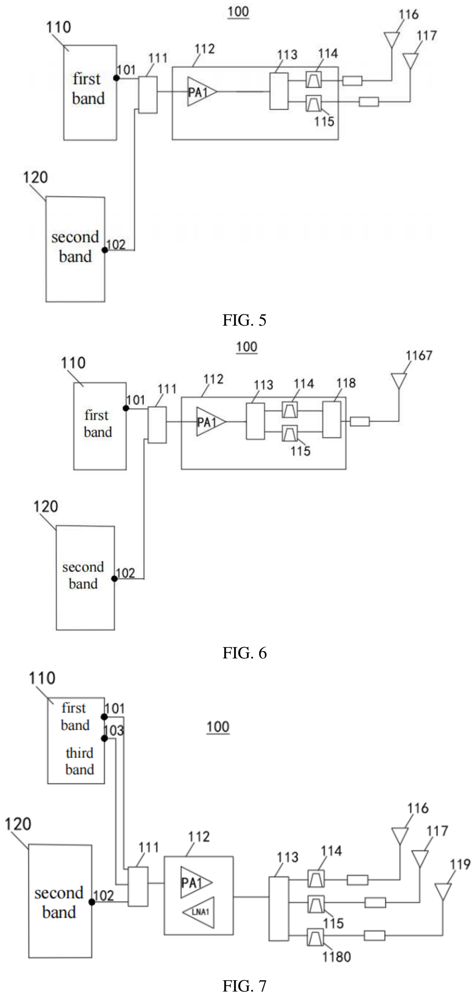

In a first alternative implementations, referring to FIG. 5, the first power amplifier PA1 is configured to amplify cellular mobile signals. The second network signal of the second frequency band reuses the power amplifier configured for amplifying the cellular mobile signals. In other words, the second port 102 of the Wi-Fi RF transceiver module is connected to the cellular mobile RF front-end circuit, which can simplify the design of the Wi-Fi RF front-end circuit.

For example, the first power amplifier PA1 is configured to amplify cellular mobile signals of 2.2-2.7 GHz. In other words, the first power amplifier PA1 is a HB power amplifier. As such, the first power amplifier PA1 may be configured to amplify signals in at least one of B7 band, B38 band, B40 band, B41 band, N7 band, N38 band, N40 band, N41 band, etc. In addition, the second port 102 of the Wi-Fi RF transceiver module is connected to the cellular mobile RF front-end circuit, so that the first power amplifier PA1 is further configured to amplify Wi-Fi signals of 2.4-2.5 GHz. For example, the first power amplifier PA1 (the HB power amplifier) may be further configured to amplify signals of Wi-Fi 2.4G band.

For another example, the first power amplifier PA1 is configured to amplify cellular mobile signals of 3.3-3.8 GHz and 4.4-5 GHz. In other words, the first power amplifier PA1 is a UHB power amplifier. Thus, the first power amplifier PA1 may be configured to amplify signals in at least one of N77 band, N78 band, N79 band, etc. In addition, the second port 102 of the Wi-Fi RF transceiver module is connected to the cellular mobile RF front-end circuit, so that the first power amplifier PA1 is further configured to amplify Wi-Fi signals of 5.15-5.85 GHz. For example, the first power amplifier PA1 (the UHB power amplifier) may be further configured to amplify signals of Wi-Fi 5G band.

In a second alternative embodiment, referring to FIG. 3, the first power amplifier PA1 is configured to amplify Wi-Fi signals. The first network signal of the first frequency band reuses the power amplifier configured for amplifying the Wi-Fi signals. In other words, the first port 101 of the cellular mobile RF transceiver module is connected to the Wi-Fi RF front-end circuit, which can simplify the design of the cellular mobile RF front-end circuit.

For example, the first power amplifier PA1 is configured to amplify Wi-Fi signals of 2.4-2.5 GHz. In other words, the first power amplifier PA1 is a Wi-Fi power amplifier. Thus, the first power amplifier PA1 may be configured to amplify signals in Wi-Fi 2.4G band. Further, the first port 101 of the cellular mobile RF transceiver module is connected to the Wi-Fi RF front-end circuit, so that the first power amplifier PA1 is further configured to amplify cellular mobile signals in 2.2-2.7 GHz. For example, the first power amplifier PA1 (the Wi-Fi power amplifier) may be further configured to amplify signals in at least one of B7 band, B38 band, B40 band, B41 band, N7 band, N38 band, N40 band, N41 band, etc.

For another example, the first power amplifier PA1 is a Wi-Fi 5G power amplifier. Further, the first port 101 of the cellular mobile RF transceiver module is connected to the Wi-Fi RF front-end circuit, so that the first power amplifier PA1 is further configured to amplify cellular mobile signals in 4.4-5 GHz band. For example, the first power amplifier PA1 (the Wi-Fi 5G power amplifier) may be further configured to amplify signals in at least one of N77 band, N78 band, N79 band, etc.

As mentioned above, the first power amplifier PA1 can amplify the first network signal and the second network signal of two different communication standards. In addition, a difference between a center frequency of the first frequency band and a center frequency of the second frequency band is less than or equal to a first preset frequency band. The first preset frequency band is not specifically limited in the embodiments of the disclosure. The first frequency band is adjacent to the second frequency band. For example, the second frequency band is 2.412-2.484 GHz, and the first frequency band is 2.496-2.696 GHz. For another example, the first frequency band is 4.4-5 GHz, and the second frequency band is 5.15-5.85 GHz. On one hand, the first frequency band is adjacent to the second frequency band, so that the first frequency band and the second frequency band may reuse the same first power amplifier PA1 for amplification. As such, the frequency response of the first power amplifier PA1 may cover the first frequency band and the second frequency band, and the requirement for the frequency response bandwidth of the first power amplifier PA1 is not excessively high. On the other hand, the first frequency band and the second frequency band may be distinguished by different filters, so that the first filter 114 is designed to allow the first frequency band to pass through, and the second filter 115 is designed to allow the second frequency band to pass through.

In these embodiments, the first network signal includes a cellular mobile signal. The second network signal includes a short-range signal which includes but is not limited to at least one of a Wi-Fi signal, a Bluetooth signal, an NFC signal, and a UWB signal.

In these embodiments, it is illustrated by taking a where the second network signal is a Wi-Fi signal as an example. Correspondingly, the first RF transceiver module 110 is the cellular mobile RF transceiver module, and the second RF transceiver module 120 is the Wi-Fi RF transceiver module. It can be seen that the RF system 100 provided according to these embodiments may support the transmission and reception of cellular mobile signals and short-range signals.

In some alternative implementations, the first frequency band includes at least one of HB bands, such as at least one of B7 band, B38 band, B40 band, B41 band, N7 band, N38 band, N40 band, N41 band, etc.; and the second frequency band includes Wi-Fi 2.4G band.

In some other alternative implementations, the first frequency band includes at least one of UHB bands, such as at least one of N77 band, N78 band, N79 band, etc.; and the second frequency band includes Wi-Fi 5G band.

In some alternative implementations, the antenna radiator 116 and second antenna radiator 117 may be the same antenna radiator or different antenna radiators.

In the embodiments illustrated in FIG. 6, the first antenna radiator 116 and the second antenna radiator 117 are the same radiator which is referred to as a first radiator 1167. The RF system 100 further includes a first antenna switch 118. Selection terminals of the first antenna switch 118 are connected to the first filter 114 and the second filter 115 respectively. A fixed terminal of the first antenna switch 118 is electrically connected to the first radiator 1167.

The first radiator 1167 may transmit and receive the first network signal of the first frequency band, when the first switch unit 111 makes the first RF transceiver module 110 and the first front-end circuit 112 conductively connected, the second switch unit 113 makes the first front-end circuit 112 and the first filter 114 conductively connected, and the first antenna switch 118 makes the first filter 114 and the first radiator 1167 conductively connected.

The first radiator 1167 may transmit and receive the second network signal of the second frequency band, when the first switch unit 111 makes the second RF transceiver module 120 and the first front-end circuit 112 conductively connected, the second switch unit 113 makes the first front-end circuit 112 and the second filter 115 conductively connected, and the first antenna switch 118 makes the second filter 115 and the first radiator 1167 conductively connected.

In these embodiments, two different network signals share one first radiator 1167. This can reduce the number of antenna radiators, further reducing the space occupied by the RF system 100 on the electronic device. Consequently, more space is reserved for setting additional antennas on the electronic device, which is beneficial for the electronic device to have more communication functions.

In addition, by switching, through the first antenna switch 118, the first radiator 1167 to operate for the first network signal of the first frequency band or the second network signal of the second frequency band, the isolation between the first network signal of the first frequency band and the second network signal of the second frequency band can be improved, so as to avoid coupling interference between the first network signal of the first frequency band and the second network signal of the second frequency band.

In some alternative implementations, referring to FIG. 7, the signal transceiver port of the first RF transceiver module 110 further includes a third port 103, and the third port 103 is configured for transmission and receipt of a first network signal of a third frequency band. The first network signal may be a cellular mobile signal, and the third frequency band is different from the first frequency band.

Referring to FIG. 7, the RF system 100 further includes a third filter 1180 and a third antenna radiator 119. One terminal of the third filter 1180 is electrically connected to a third selection terminal of the second switch unit 113. The third filter 1180 is configured to allow the first network signal of the third frequency band to pass through. The third filter 1180 is a band-pass filter. A passband of the third filter 1180 includes the third frequency band. The third filter 1180 is arranged in parallel with the second filter 115 and the first filter 114.

The third antenna radiator 119 is electrically connected to the other terminal of the third filter 1180. The third antenna radiator 119 is configured to transmit and receive the first network signal of the third frequency band.

In addition, the third frequency band may be adjacent to the first frequency band and the second frequency band, so that transmission signals of the first frequency band, the second frequency band, and the third frequency band may be amplified through the same first power amplifier PA1, and reception signals of the first frequency band, the second frequency band, and the third frequency band may be amplified through the same first low noise amplifier LNA1.

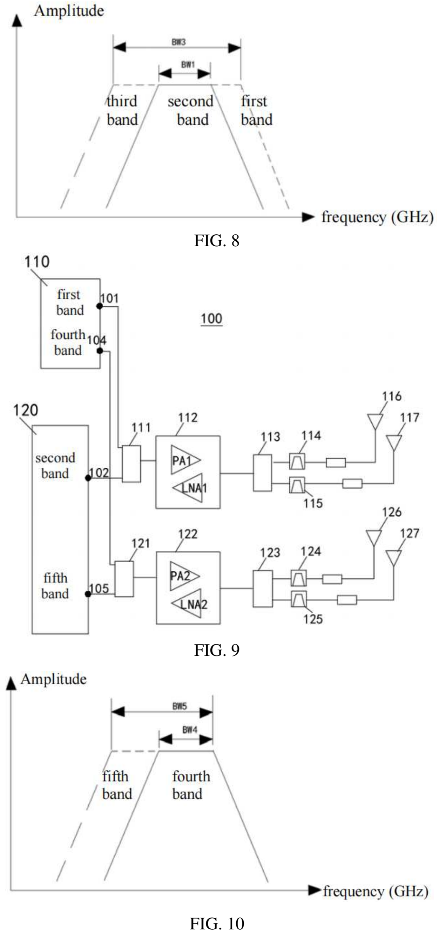

In other words, referring to FIG. 8, the frequency response band of the first power amplifier PA1 may cover the first frequency band, the second frequency band, and the third frequency band; and the frequency response band of the first low noise amplifier LNA1 may cover the first frequency band, the second frequency band, and the third frequency band. Compared with setting one power amplifier for each frequency band, such arrangement can reduce the number of components, thereby reducing the space occupied by the RF system 100 and saving costs. In a case where the first front-end circuit 112 is the RF front-end circuit for Wi-Fi 2.4G band, the frequency response BW3 of the first power amplifier PA1 is 2.412-2.7 GHz.

For example, the second frequency band is Wi-Fi 5G band, the first frequency band is N79 band, and the third frequency band is N78 band.

For another example, the second frequency band is Wi-Fi 2.4G band, the first frequency band is N41 band, and the third frequency band is B40 band.

When the first switch unit 111 makes the third port 103 of the first RF transceiver module 110 and the first front-end circuit 112 conductively connected, the first network signal of the third frequency band sent from the third port 103 of the first RF transceiver module 110 is amplified by the transmitting path of the first front-end circuit 112, then passes through the second switch unit 113 and the third filter 1180, and is sent to the third antenna radiator 119, so that the third antenna radiator 119 transmits the first network signal of the third frequency band. In this case, the third antenna radiator 119 further receives the first network signal of the third frequency band, and the received signal is sent to the third port 103 of the first RF transceiver module 110 after passing through the third filter 1180, the second switch unit 113, and the receiving channel of the first front-end circuit 112.

Correspondingly, the first antenna radiator 116 and third antenna radiator 119 may be the same antenna radiator or different antenna radiators.

In some alternative implementations, the first antenna radiator 116, the second antenna radiator 117, and the third antenna radiator 119 are the same radiator which is referred to as a first radiator 1167. The RF system 100 further includes a first antenna switch 118. Selection terminals of the first antenna switch 118 are connected to the first filter 114, the second filter 115, and the third filter 1180 respectively. A fixed terminal of the first antenna switch 118 is electrically connected to the first radiator 1167. The first antenna switch 118 is configured to be switched to different filters to make the first network signal of the first frequency band, the second network signal of the second frequency band, or the first network signal of the third frequency band pass through.

In the above embodiments, three filters are connected to the selection side of the second switch unit 113 of the first front-end circuit 112. In other embodiments, four, five, or more filters are connected to the selection side of the second switch unit 113 of the first front-end circuit 112.

For example, the multiple filters are respectively configured to allow any combination of Wi-Fi 5G band, N79 band, N78 band, N77 band, UWB band, etc. to pass through.

For another example, the multiple filters are respectively configured to allow any combination of Wi-Fi 2.4G band, B7 band, B38 band, B40 band, B41 band, N7 band, N38 band, N40 band, N41 band, Bluetooth band, etc.

In some alternative implementations, it is illustrated by taking a case where the first frequency band is the HB band and the second frequency band is the Wi-Fi 2.4G band as an example.

Referring to FIG. 9, the signal transceiver port of the first RF transceiver module 110 further includes a fourth port 104. Signals transmitted and received by the fourth port 104 include a first network signal of a fourth frequency band. In other words, the first RF transceiver module 110 is further configured for transmission and receipt of the first network signal of the fourth frequency band.

When the first network signal is a cellular mobile network signal, the fourth frequency band includes but is not limited to at least one of LB band, MB band, HB band, and UHB band.

Referring to FIG. 9, the signal transceiver port of the second RF transceiver module 120 further includes a fifth port 105. Signals transmitted and received by the fifth port 105 include a second network signal of a fifth frequency band. In other words, the second RF transceiver module 120 is further configured for transmission and receipt of the second network signal of the fifth frequency band.

When the second network signal is a Wi-Fi signal, the fifth frequency band includes but is not limited to Wi-Fi 2.4G band, Wi-Fi 5G band, or Wi-Fi 6G band.

Referring to FIG. 9, the RF system 100 further includes a third switch unit 121, a second front-end circuit 122, a fourth switch unit 123, a fourth filter 124, a fifth filter 125, a fourth antenna radiator 126, and a fifth antenna radiator 127.

Two selection terminals of the third switch unit 121 are electrically connected to the first RF transceiver module 110 and the second RF transceiver module 120 respectively. Specifically, the two selection terminals of the third switch unit 121 are electrically connected to the fourth port 104 and the fifth port 105 respectively.

One terminal of the second front-end circuit 122 is electrically connected to a fixed terminal of the third switch unit 121.

Specifically, the second front-end circuit 122 is also referred to as a RF front-end circuit connected between the RF transceiver module and the antenna radiator. The structure and function of the second front-end circuit 122 may refer to the relevant content of the aforementioned first front-end circuit 112.

One terminal of the fourth switch unit 123 is electrically connected to the other terminal of the second front-end circuit 122. Two selection terminals of the fourth switch unit 123 are connected to the fourth filter 124 and the fifth filter 125 respectively.

One terminal of the fourth filter 124 is electrically connected to a first selection terminal of the fourth switch unit 123. The fourth filter 124 is configured to allow the first network signal of the fourth frequency band to pass through. The fourth filter 124 is a band-pass filter. A passband of the fourth filter 124 includes the fourth frequency band.

For example, the fourth frequency band is N78 band, and the fourth filter 124 is configured to allow cellular mobile signals of N78 band to pass through.

One terminal of the fifth filter 125 is electrically connected to a second selection terminal of the fourth switch unit 123. The fifth filter 125 is configured to allow a second network signal of a fifth frequency band to pass through. The fifth filter 125 is a band-pass filter. A passband of the fifth filter 125 includes the fifth frequency band.

For example, the fifth frequency band is Wi-Fi 5G band, and the fifth filter 125 is configured to allow signals of Wi-Fi 5G band to pass through.

The fourth antenna radiator 126 is electrically connected to the other terminal of the fourth filter 124. The fourth antenna radiator 126 is configured to transmit and receive the first network signal of the fourth frequency band.

The fifth antenna radiator 127 is electrically connected to the other terminal of the fifth filter 125. The fifth antenna radiator 127 is configured to transmit and receive the second network signal of the fifth frequency band.

When the third switch unit 121 makes the fourth port 104 of the first RF transceiver module 110 and the second front-end circuit 122 conductively connected, the first network signal of the fourth frequency band sent from the fourth port 104 of the first RF transceiver module 110 is amplified by the transmitting path of the second front-end circuit 122, then passes through the fourth switch unit 123 and the fourth filter 124, and is sent to the fourth antenna radiator 126, so that the fourth antenna radiator 126 transmits the first network signal of the fourth frequency band. In this case, the fourth antenna radiator 126 further receives the first network signal of the fourth frequency band, and the received signal is sent to the first RF transceiver module 110 after passing through the fourth filter 124, the fourth switch unit 123, and the receiving channel of the second front-end circuit 122.

When the third switch unit 121 makes the fifth port 105 of the second RF transceiver module 120 and the second front-end circuit 122 conductively connected, the second network signal of the fifth frequency band sent from the fifth port 105 of the second RF transceiver module 120 is amplified by the second front-end circuit 122, then passes through the fourth switch unit 123 and the fifth filter 125, and is sent to the fifth antenna radiator 127, so that the fifth antenna radiator 127 transmits the second network signal of the fifth frequency band. In this case, the fifth antenna radiator 127 further receives the second network signal of the fifth frequency band, and the received signal is sent to the second RF transceiver module 120 after passing through the fifth filter 125, the fourth switch unit 123, and the receiving channel of the second front-end circuit 122.

As can be seen from the above, in these embodiments, the first network signal and the second network signal of different communication standards can be sent, and the second front-end circuit 122 is reused for the two types of network signals. Compared with configuring one second front-end circuit 122 for each network signal, the number of second front-end circuits 122 can be reduced, thereby reducing the number of components of the second front-end circuit 122 and the area occupied by the components, while supporting the first network signal and the second network signal.

Referring to FIG. 7 and FIG. 9, the number of the third antenna radiators 119, the number of the fourth antenna radiators 126, or the number of the fifth antenna radiators 127 may also be designed with reference to the number of the first antenna radiators 116.

In some alternative implementations, referring to FIG. 9 and FIG. 10, the second front-end circuit 122 includes a second power amplifier PA2. A frequency response range of the second power amplifier PA2 covers the fourth frequency band and the fifth frequency band, so that the second power amplifier PA2 may amplify the first network signal of the fourth frequency band and the second network signal of the fifth frequency band, thereby facilitating the reuse of the second power amplifier PA2 for the first network signal and the second network signal. In a case where the first front-end circuit 112 is a RF front-end circuit for Wi-Fi 5G band, the frequency response BW5 of the second power amplifier PA2 is 4.4-5.85 GHz.

The second power amplifier PA2 is configured to amplify the first network signal or the second network signal.

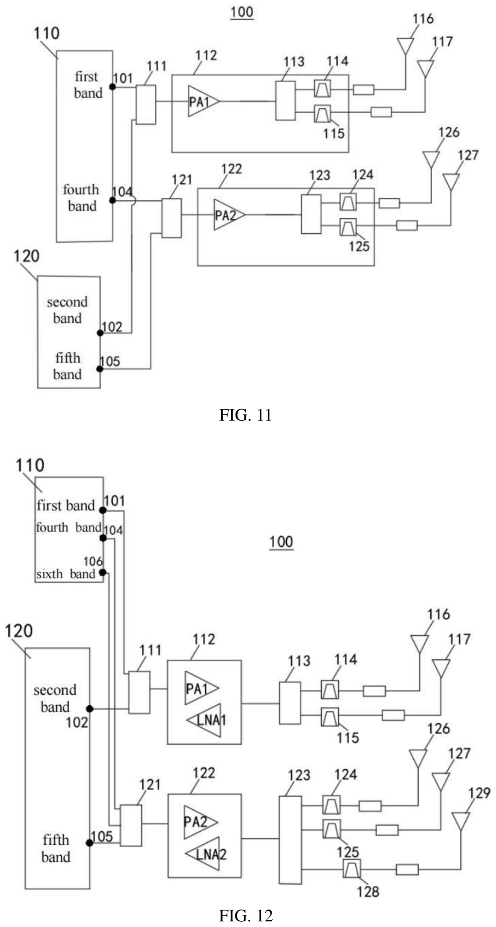

In a first alternative implementation, referring to FIG. 11, the second power amplifier PA2 is configured to amplify cellular mobile signals. The second network signal of the fifth frequency band reuses the power amplifier configured for amplifying cellular mobile signals. In other words, the fifth port 105 of the Wi-Fi RF transceiver module is connected to the cellular mobile RF front-end circuit, which can simplify the design of the Wi-Fi RF front-end circuit.

For example, the second power amplifier PA2 is configured to amplify cellular mobile signals in 3.3-3.8 GHz and 4.4-5 GHz. In other words, the second power amplifier PA2 is a UHB power amplifier. Thus, the second power amplifier PA2 may be configured to amplify signals in at least one of N77 band, N78 band, N79 band, etc. Further, the fifth port 105 of the Wi-Fi RF transceiver module is connected to the cellular mobile RF front-end circuit, so that the second power amplifier PA2 is further configured to amplify Wi-Fi signals in 5.15-5.85 GHz band. For example, the second power amplifier PA2 (the UHB power amplifier) may be further configured to amplify signals in Wi-Fi 5G band.

In a second alternative implementations, referring to FIG. 9, the second power amplifier PA2 is configured to amplify Wi-Fi signals. The first network signal of the fourth frequency band reuses the power amplifier configured for amplifying Wi-Fi. In other words, the fourth port 104 of the cellular mobile RF transceiver module is connected to the Wi-Fi RF front-end circuit, which can simplify the design of the cellular mobile RF front-end circuit.

For example, the second power amplifier PA2 is configured to amplify Wi-Fi signals in 2.4-2.5 GHz band. In other words, the second power amplifier PA2 is a Wi-Fi power amplifier. Thus, the second power amplifier PA2 may be configured to amplify signals in Wi-Fi 2.4G band. Further, the fourth port 104 of the cellular mobile RF transceiver module is connected to the Wi-Fi RF front-end circuit, so that the second power amplifier PA2 is further configured to amplify cellular mobile signals in 2.2-2.7 GHz band. For example, the second power amplifier PA2 (the Wi-Fi power amplifier) may be further configured to amplify signals in at least one of B7 band, B38 band, B40 band, B41 band, N7 band, N38 band, N40 band, N41 band, etc.

For another example, the second power amplifier PA2 is a Wi-Fi 5G power amplifier. Further, the fourth port 104 of the cellular mobile RF transceiver module is connected to the Wi-Fi RF front-end circuit, so that the second power amplifier PA2 is further configured to amplify cellular mobile signals in 4.4-5 GHz band. For example, the second power amplifier PA2 (the Wi-Fi 5G power amplifier) may be further configured to amplify signals in at least one of N77 band, N78 band, N79 band, etc.

In some alternative implementations, the first network signal includes a cellular mobile signal, and the second network signal includes a short-range signal.

The first frequency band includes at least one of HB bands, such as at least one of B7 band, B38 band, B40 band, B41 band, N7 band, N38 band, N40 band, N41 band, etc. The second frequency band includes Wi-Fi 2.4G band. The fourth frequency band includes at least one of UHB bands, such as at least one of N77 frequency, N78 frequency, N79 frequency, etc. The fifth frequency band includes Wi-Fi 5G band.

In some alternative implementations, referring to FIG. 12, the signal transceiver port of the first RF transceiver module 110 further includes a sixth port 106, and the sixth port 106 is configured to transmit and receive a first network signal of a sixth frequency band. The first network signal may be a cellular mobile signal. The sixth frequency band is different from the first frequency band. The first RF transceiver module 110 is further configured for transmission and receipt of the first network signal of the sixth frequency band.

Referring to FIG. 12, the RF system 100 further includes a sixth filter 128 and a sixth antenna radiator 129.

One terminal of the sixth filter 128 is electrically connected to a third selection terminal of the fourth switch unit 123. The sixth filter 128 is configured to allow the first network signal of the sixth frequency band to pass through. The sixth filter 128 is arranged in parallel with the fifth filter 125 and the fourth filter 124.

The sixth antenna radiator 129 is electrically connected to the other terminal of the sixth filter 128. The sixth antenna radiator 129 is configured to transmit and receive the first network signal of the sixth frequency band.

In addition, the sixth frequency band may be adjacent to the fourth frequency band and the fifth frequency band, so that transmission signals of the fourth frequency band, the fifth frequency band, and the sixth frequency band may be amplified through the same second power amplifier PA2, and reception signals of the fourth frequency band, the fifth frequency band, and the sixth frequency band may be amplified through the same second low noise amplifier.

In other words, the frequency response band of the second power amplifier PA2 may cover the fourth frequency band, the fifth frequency band, and the sixth frequency band; and the frequency response band of the second low noise amplifier may cover the fourth frequency band, the fifth frequency band, and the sixth frequency band. Compared with setting one power amplifier for each frequency band, this arrangement can reduce the number of components, thereby reducing the space occupied by the RF system 100 and saving costs.

For example, the fourth frequency band is N79 band, the fifth frequency band is Wi-Fi 5G band, and the sixth frequency band is N78 band.

When the third switch unit 121 makes the sixth port 106 of the first RF transceiver module 110 and the second front-end circuit 122 conductively connected, the first network signal of the sixth frequency band sent from the sixth port 106 of the first RF transceiver module 110 is amplified by the transmitting path of the second front-end circuit 122, then passes through the fourth switch unit 123 and the sixth filter 128, and is sent to the sixth antenna radiator 129, so that the sixth antenna radiator 129 transmits the first network signal of the sixth frequency band. In this case, the sixth antenna radiator 129 further receives the first network signal of the sixth frequency band, and the received signal is sent to the sixth port 106 of the first RF transceiver module 110 after passing through the sixth filter 128, the fourth switch unit 123, and the receiving channel of the second front-end circuit 122.

Correspondingly, the fourth antenna radiator 126, the fifth antenna radiator 127, and the sixth antenna radiator 129 may be the same antenna radiator or different antenna radiators.

The physical forms of the first front-end circuit 112, the first switch unit 111, the second switch unit 113, the first filter 114, and the second filter 115 are not specifically limited in the embodiments of the disclosure.

In some alternative implementations, referring to FIG. 11, the first front-end circuit 112 and at least one of the first switch unit 111, the second switch unit 113, the first filter 114, and the second filter 115 is integrated into one chip.

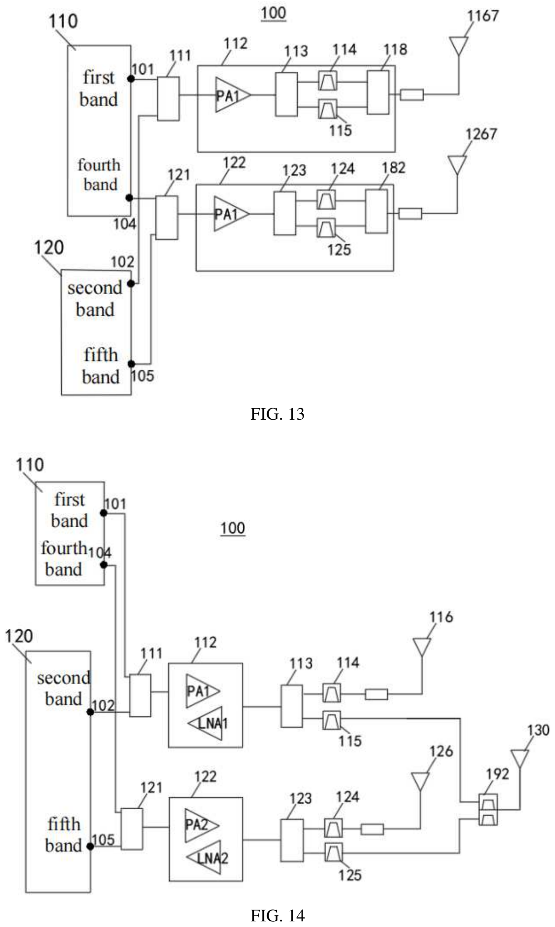

In some alternative implementations, referring to FIG. 13, the first front-end circuit 112 may be a cellular mobile front-end circuit. The first power amplifier PA1 and the first low noise amplifier LNA1 in the first front-end circuit 112, the second switch unit 113, the first filter 114, the second filter 115, and the first antenna switch 118 are integrated into one chip, for example, an L-PAMiD chip. In this way, the first front-end circuit 112 has a high integration level.

Further, the first power amplifier PA1 includes at least one of an LB power amplifier, an MB power amplifier, and an HB power amplifier. In other words, the first front-end circuit 112 may integrate a power amplifier and a low noise amplifier for LB band, MB band, and HB band to transmit and receive signals in LB band, MB band, and HB band.

In other alternative implementations, the first front-end circuit 112, the first switch unit 111, the second switch unit 113, the first filter 114, and the second filter 115 are components independent from each other.

Specifically, referring to FIG. 12, the first front-end circuit 112 may be a Wi-Fi front-end circuit. The first power amplifier PA1 and the first low noise amplifier LNA1 of the first front-end circuit 112 are integrated into one chip. The first switch unit 111, the second switch unit 113, the first filter 114, and the second filter 115 are arranged outside the first front-end circuit 112. In this way, it is convenient to implement additional circuit architecture modifications around the periphery of the first front-end circuit 112.

In some alternative implementations, the second front-end circuit 122 and at least one of the third switch unit 121, the fourth switch unit 123, the fourth filter 124, and the fifth filter 125 are integrated into one chip.

Specifically, referring to FIG. 11, the second front-end circuit 122 may be a cellular mobile front-end circuit. The second power amplifier PA2 and the second low noise amplifier in the second front-end circuit 122, the fourth switch unit 123, the fourth filter 124, and the fifth filter 125 are integrated into one chip, for example, an L-PAMiD chip. In some embodiments, the third switch unit 121 is further integrated into the chip. In this way, the first front-end circuit 112 has a high integration level.

The second front-end circuit 122, the third switch unit 121, the fourth switch unit 123, the fourth filter 124, and the fifth filter 125 are components independent from each other.

Specifically, referring to FIG. 12, the second front-end circuit 122 may be a Wi-Fi front-end circuit. The second power amplifier PA2 and the second low noise amplifier of the second front-end circuit 122 are integrated into one chip. The third switch unit 121, the fourth switch unit 123, the fourth filter 124, and the fifth filter 125 are arranged outside the second front-end circuit 122. In this way, it is convenient to implement additional circuit architecture modifications around the periphery of the second front-end circuit 122.

Referring to FIG. 11 and FIG. 13, the fourth antenna radiator 126 and the fifth antenna radiator 127 are the same radiator which is referred to as a second radiator 1267. The RF system 100 further includes a second antenna switch 182. Selection terminals of the second antenna switch 182 are connected to the fourth filter 124 and the fifth filter 125 respectively. A fixed terminal of the second antenna switch 182 is electrically connected to the second radiator 1267.

When the third switch unit 121 makes the first RF transceiver module 110 and the second front-end circuit 122 conductively connected, the fourth switch unit 123 makes the second front-end circuit 122 and the fourth filter 124 conductively connected, and the second antenna switch 182 makes the fourth filter 124 and the second radiator 1267 conductively connected, so that the second radiator 1267 may transmit and receive the first network signal of the fourth frequency band.

When the third switch unit 121 makes the second RF transceiver module 120 and the second front-end circuit 122 conductively connected, the fourth switch unit 123 makes the second front-end circuit 122 and the fifth filter 125 conductively connected, and the second antenna switch 182 makes the fifth filter 125 and the second radiator 1267 conductively connected, so that the second radiator 1267 may transmit and receive the second network signal of the fifth frequency band.

In these embodiments, two different types of network signals share one second radiator 1267. In this way, the number of antenna radiators can be reduced, which reduces the space occupied by the RF system 100 on the electronic device. Consequently, more space is reserved for setting additional antennas on the electronic device, which is beneficial for the electronic device to have more communication functions.

In addition, the second antenna switch 182 is switched to enable the second radiator 1267 to operate for the first network signal of the fourth frequency band or the second network signal of the fifth frequency band, the isolation between the first network signal of the fourth frequency band and the second network signal of the fifth frequency band can be improved, so as to avoid coupling interference between the first network signal of the fourth frequency band and the second network signal of the fifth frequency band.

Furthermore, referring to FIG. 12 and FIG. 13, the fourth antenna radiator 126, the fifth antenna radiator 127, and the sixth antenna radiator 129 are the same radiator which is referred to as a second radiator 1267. The RF system 100 further includes a second antenna switch 182. Selection terminals of the second antenna switch 182 are connected to the fourth filter 124, the fifth filter 125, and the sixth filter 128 respectively. A fixed terminal of the second antenna switch 182 is electrically connected to the second radiator 1267.

Further, in some alternative implementations, when the difference between two frequency bands is greater than or equal to the first preset frequency band, the antenna radiators of the two frequency bands may be combined through a combiner, and the same antenna radiator is reused.

In some alternative implementations, due to a certain gap between the second frequency band and the fifth frequency band, the antenna radiator of the second frequency band and the antenna radiator of the fifth frequency band may be combined into a same antenna radiator through a combiner.

Specifically, the second antenna radiator 117 and the fifth antenna radiator 127 are a same radiator which is referred to as a first sub-radiator.

Referring to FIG. 14, the RF system 100 further includes a first combiner 192. One side of the first combiner 192 is electrically connected to the second filter 115 and the fifth filter 125, and the other side of the first combiner 192 is electrically connected to the first sub-radiator 130.

For example, the second frequency band is Wi-Fi 2.4G band, and the fifth frequency band is Wi-Fi 5G band. Due to a relatively large gap between the second frequency band and the fifth frequency band, the coupling effect is small. In these embodiments, the first combiner 192 is configured to combine the transmitting and receiving channels of Wi-Fi 2.4G band and Wi-Fi 5G band, to reuse the same first sub-radiator 130. In this way, the number of antenna radiators can be reduced, which further reduce the space occupied by the RF system 100 on the electronic device. Consequently, more space is reserved for arranging additional antennas on the electronic device, which is beneficial for the electronic device to have more communication functions.

In some alternative implementations, due to a certain gap between the second frequency band and the fourth frequency band, the antenna radiator of the second frequency band and the antenna radiator of the fourth frequency band may be combined into a same antenna radiator through a combiner.

Specifically, the second antenna radiator 117 and the fourth antenna radiator 126 are a same radiator which is referred to as a second sub-radiator.

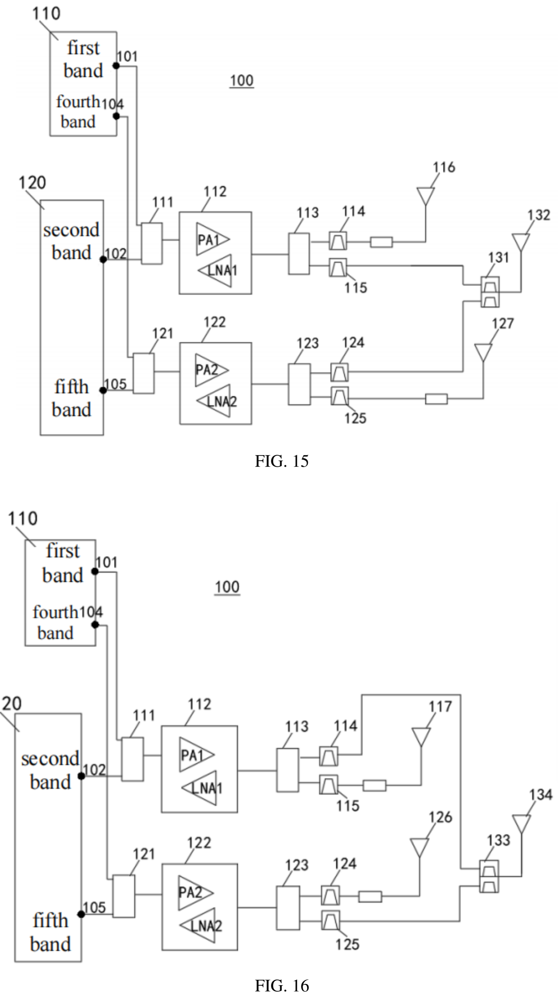

Referring to FIG. 15, the RF system 100 further includes a second combiner 131. One side of the second combiner 131 is electrically connected to the second filter 115 and the fourth filter 124, and the other side of the second combiner 131 is electrically connected to the second sub-radiator 132.

For example, the second frequency band is Wi-Fi 2.4G band, and the fourth frequency band is N79 band. Due to a relatively large gap between the second frequency band and the fourth frequency band, the coupling effect is small. In these embodiments, the second combiner 131 is configured to combine the transmitting and receiving channels of Wi-Fi 2.4G band and N79 band, to reuse the same second sub-radiator 132. In this way, the number of antenna radiators can be reduced, which reduces the space occupied by the RF system 100 on the electronic device. Consequently, more space is reserved for arranging additional antennas on the electronic device, which is beneficial for the electronic device to have more communication functions.

In some alternative implementations, due to a certain gap between the first frequency band and the fifth frequency band, the first frequency band and the fifth frequency band may be combined into a same antenna radiator through a combiner.

Specifically, the first antenna radiator 116 and the fifth antenna radiator 127 are a same radiator which is referred to as a third sub-radiator.

Referring to FIG. 16, the RF system 100 further includes a third combiner 133. One side of the third combiner 133 is electrically connected to the first filter 114 and the fifth filter 125, and the other side of the third combiner 133 is electrically connected to the third sub-radiator 134.

For example, the first frequency band is N41 band, and the fifth frequency band is Wi-Fi 5G band. Due to the relatively large gap between the first frequency band and the fifth frequency band, the coupling effect is small. In these embodiments, the third combiner 133 is configured to combine the transmitting and receiving channels of N41 band and Wi-Fi 5G band, to reuse the same third sub-radiator 134. In this way, the number of antenna radiators can be reduced, which further reduced the space occupied by the RF system 100 on the electronic device. Consequently, more space is reserved for arranging additional antennas on the electronic device, which is beneficial for the electronic device to have more communication functions.

In some alternative implementations, due to a certain gap between the first frequency band and the fourth frequency band, the antenna radiator of the first frequency band and the antenna radiator of the fourth frequency band may be combined into a same antenna radiator through a combiner.

Specifically, the second antenna radiator 117 and the fourth antenna radiator 126 are a same radiator which is referred to as a fourth sub-radiator.

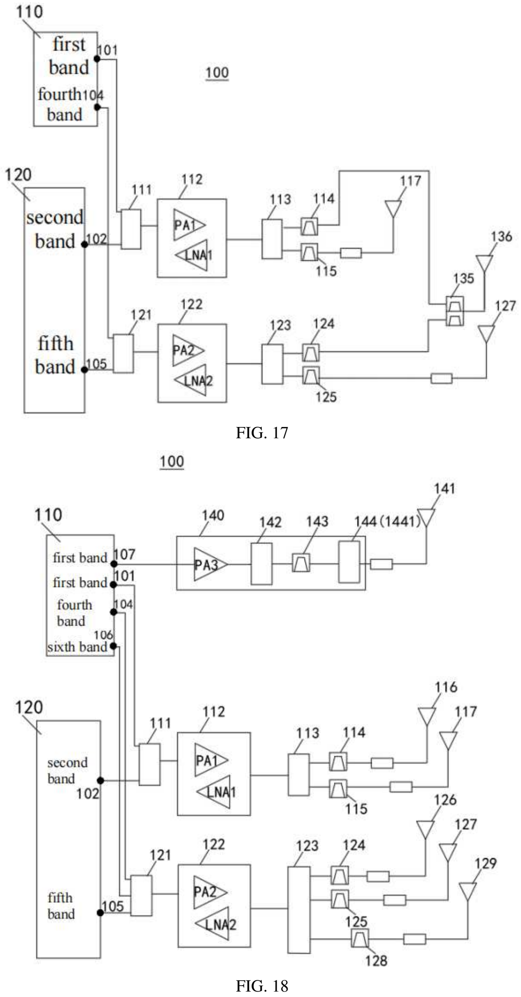

Referring to FIG. 17, the RF system 100 further includes a fourth combiner 135. One side of the fourth combiner 135 is electrically connected to the first filter 114 and the fourth filter 124, and the other side of the fourth combiner 135 is electrically connected to the fourth sub-radiator 136.

For example, the first frequency band is N41 band, and the fourth frequency band is N79 band. Due to a relatively large gap between the first frequency band and the fourth frequency band, the coupling effect is small. In these embodiments, the fourth combiner 135 is configured to combine the transmitting and receiving channels of N41 band and N79 band, to reuse the same fourth sub-radiator 136. In this way, the number of antenna radiators can be reduced, which reduces the space occupied by the RF system 100 on the electronic device. Consequently, more space are reserved for arranging additional antennas on the electronic device, which is beneficial for the electronic device to have more communication functions.

In some alternative implementations, referring to FIG. 18, the RF system 100 further includes a third front-end circuit 140 and a seventh antenna radiator 141. One terminal of the third front-end circuit 140 is electrically connected to the first RF transceiver module 110. The other terminal of the third front-end circuit 140 is electrically connected to the seventh antenna radiator 141. The third front-end circuit 140 is at least configured to transmit and receive the first network signal of the first frequency band.

Referring to FIG. 18, the signal transceiver port of the first RF transceiver module 110 further includes a seventh port 107. The seventh port 107 is configured to transmit and receive the first network signal of the first frequency band. One terminal of the third front-end circuit 140 is electrically connected to the seventh port 107. The other terminal of the third front-end circuit 140 is electrically connected to the seventh antenna radiator 141.

For example, the first frequency band is N41 band.

The third front-end circuit 140 and the seventh antenna radiator 141 form a resident antenna path supporting N41 band.

In situations where the cellular mobile signal is in a weak field (such as in a underground parking), uplink coverage needs to be enhanced or download speeds need to be increased, the first switch unit 111 may be controlled to be switched to make the first port 101 of the first RF transceiver module 110 and the first front-end circuit 112 conductively connected, and the second switch unit 113 may be switched to make the first front-end circuit 112 and the first filter 114 conductively connected, thereby forming a second antenna path supporting N41 band. In this way, a 2Tx requirement for N41 band is realized, that is, N41 band is supported by two transmission paths.

In ordinary circumstances, the first switch unit 111 may be controlled to be switched to make the second port 102 of the second RF transceiver module 120 and the first front-end circuit 112 conductively connected, and the second switch unit 113 may be switched to make the first front-end circuit 112 and the second filter 115 conductively connected, so that the RF system 100 may support a combination of N41 band and Wi-Fi 2.4G band. An operating mode of N41 band may be single-input single-output or multiple-input multiple-output.

Further, in some alternative implementations, referring to FIG. 18, the third front-end circuit 140 includes a third power amplifier PA3, a third band selection switch 142, a third front-end filter 143, and a third front-end switch 144, which are electrically connected in sequence.

In some alternative implementations, the third power amplifier PA3 and at least one of the third band selection switch 142, the third front-end filter 143, and the third front-end switch 144 are integrated into one chip.

For example, the third front-end circuit 140 is a cellular mobile front-end circuit. The third power amplifier PA3, a third low noise amplifier, the third band selection switch 142, the third front-end filter 143, and the third front-end switch 144 in the third front-end circuit 140 are integrated into one chip, for example, an L-PAMiD chip. The third front-end circuit 140 in these embodiments has a high integration level.

Further, the third power amplifier PA3 includes at least one of an LB power amplifier, an MB power amplifier, and an HB power amplifier. In other words, the third front-end circuit 140 may integrate power amplifiers and low noise amplifiers for LB band, MB band, and HB band to realize the transmission and reception of signals in LB band, MB band, and HB band.

In some other alternative implementations, the third power amplifier PA3, the third band selection switch 142, the third front-end filter 143, and the third front-end switch 144 are independent components.

Specifically, the third power amplifier PA3, the third low noise amplifier, and the third band selection switch 142 of the third front-end circuit 140 are integrated into one chip. The third front-end filter 143 and the third front-end switch 144 are arranged outside the third front-end circuit 140. In this way, it is convenient to implement additional circuit architecture modifications around the periphery of the third front-end circuit 140.

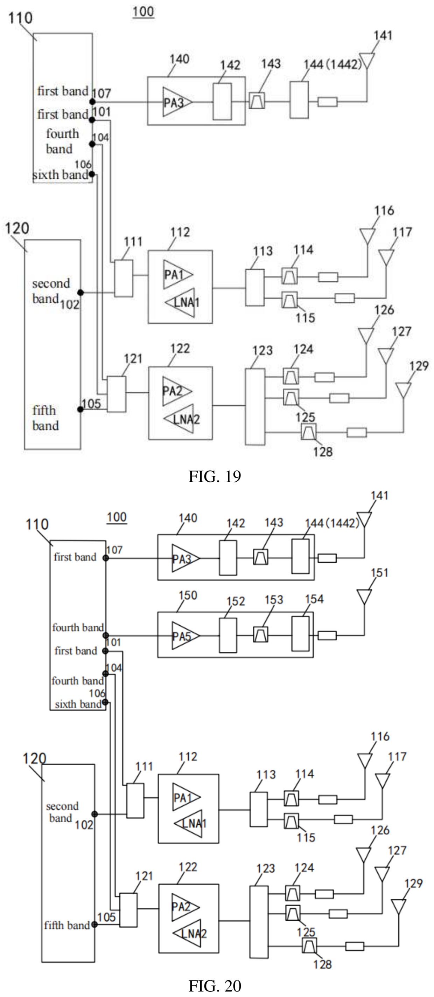

In some alternative implementations, referring to FIG. 18 and FIG. 19, the third front-end switch 144 includes an antenna switch 1441 or a transfer switch 1442.

In some alternative implementations, the antenna switch 1441 may be configured to perform switching between different antenna radiators of the same frequency band, and also perform switching between different antenna radiators of different frequency bands.

In some alternative implementations, the transfer switch 1442 may be configured to perform switching between different antenna radiators of the same frequency band. Since different antenna radiators are located at different positions on the electronic device, through switching between different antenna radiators, a position of an antenna radiator with optimal performance may be determined, so as to obtain better signal strength. The transfer switch 1442 may further support a multiple-input multiple-output mode for the same frequency band.

The transfer switch 1442 includes but is not limited to a sounding reference signal (SRS) transfer switch 1442. Specifically, SRS antenna switching technology allows multiple antennas on a terminal to transmit SRS signals in turn, so that comprehensive channel information is provided to assist a base station in achieving precise data transmission. For example, in a 2T4R configuration, four antenna radiators on the electronic device transmit SRS signals in turn with two radiators selected to transmit at a time, thereby making full use of the multiple available antenna radiators.

In these embodiments, only three RF front-end circuits are needed to support a combination of the first frequency band (e.g., N41 band in HB), the second frequency band (e.g., Wi-Fi 2.4G band), and the fourth frequency band (e.g., N79 band in UHB)/the fifth frequency band (e.g., Wi-Fi 5G band), or to support a combination of a 2T4R implementation of the first frequency band (e.g., N41 band in HB), and the fourth frequency band (e.g., N79 band in UHB)/the fifth frequency band (e.g., Wi-Fi 5G band).

In some alternative implementations, referring to FIG. 20, the RF system 100 further includes a fourth front-end circuit 150 and an eighth antenna radiator 151. One terminal of the fourth front-end circuit 150 is electrically connected to the first RF transceiver module 110. The other terminal of the fourth front-end circuit 150 is electrically connected to the eighth antenna radiator 151. The fourth front-end circuit 150 is at least configured for transmission and receipt of the first network signal of the fourth frequency band.

Furthermore, the RF system 100 further includes a sixth filter 128 and a sixth antenna radiator 129 for supporting the sixth frequency band.

For example, the first frequency band is N41 band in HB, the second frequency band is Wi-Fi 2.4G band, the fourth frequency band is N79 band in UHB, the fifth frequency band is the Wi-Fi 5G band, and the sixth frequency band is N78 band in UHB.

Specifically, the fourth front-end circuit 150 and the eighth antenna radiator 151 form a resident antenna path supporting N79 band. The operating mode of N79 band may be single-input single-output or multiple-input multiple-output.

With reference to N41 band in the above embodiments, the third switch unit 121 and the fourth switch unit 123 are controlled to enable the third front-end circuit 140 to provide a second antenna path for N79 band, which is conducive to enabling a 2T4R (2 transmission antennas and 4 reception antennas) implementation for N79 band.

Further, in some alternative implementations, referring to FIG. 20, the fourth front-end circuit 150 includes a fourth power amplifier PA5, a fourth band selection switch 152, a fourth front-end filter 153, and a fourth front-end switch 154, which are electrically connected in sequence.

In some alternative implementations, the fourth power amplifier PA5 and at least one of the fourth band selection switch 152, the fourth front-end filter 153, and the fourth front-end switch 154 are integrated into one chip.

For example, the fourth front-end circuit 150 is a cellular mobile front-end circuit. The fourth power amplifier PA5, the fourth low noise amplifier, the fourth band selection switch 152, the fourth front-end filter 153, and the fourth front-end switch 154 in the fourth front-end circuit 150 are integrated into one chip, for example, an L-PAMiD chip. The fourth front-end circuit 150 in these embodiments has a high integration level.

Further, the fourth power amplifier PA5 includes at least one of an LB power amplifier, an MB power amplifier, and an HB power amplifier. In other words, the fourth front-end circuit 150 may integrate power amplifiers and low noise amplifiers for LB band, MB band, and HB band to realize the transmission and reception of signals in LB band, MB band, and HB band.

In some other alternative implementations, the fourth power amplifier PA5, the fourth band selection switch 152, the fourth front-end filter 153, and the fourth front-end switch 154 are independent components.

Specifically, the fourth power amplifier PA5, the fourth low noise amplifier, and the fourth band selection switch 152 of the fourth front-end circuit 150 are integrated into one chip. The fourth front-end filter 153 and the fourth front-end switch 154 are arranged outside the fourth front-end circuit 150. In this way, it is convenient to implement additional circuit architecture modifications around the periphery of the fourth front-end circuit 150.

In some alternative implementations, the fourth front-end switch 154 includes an antenna switch or a transfer switch.

In some alternative implementations, the antenna switch may perform switching between different antenna radiators of the same frequency band, and may further perform switching between different antenna radiators of different frequency bands. Alternatively, the transfer switch may perform switching between different antenna radiators of the same frequency band.

In these embodiments, only four RF front-end circuits are needed to support switching between a combination of the first frequency band (e.g., N41 band in HB) + the second frequency band (e.g., Wi-Fi 2.4G band) and 2T4R of the first frequency band (e.g., N41 band in HB), and support switching between a combination of the fourth frequency band (e.g., N79 band in UHB) + the fifth frequency band (e.g., Wi-Fi 5G band) and a 2T4R implementation of the fourth frequency band (e.g., N79 band in UHB), thereby forming more frequency band combinations.

Apparently, in these embodiments, the RF system 100 may support the sixth frequency band without including the sixth filter 128 and the sixth antenna radiator 129.

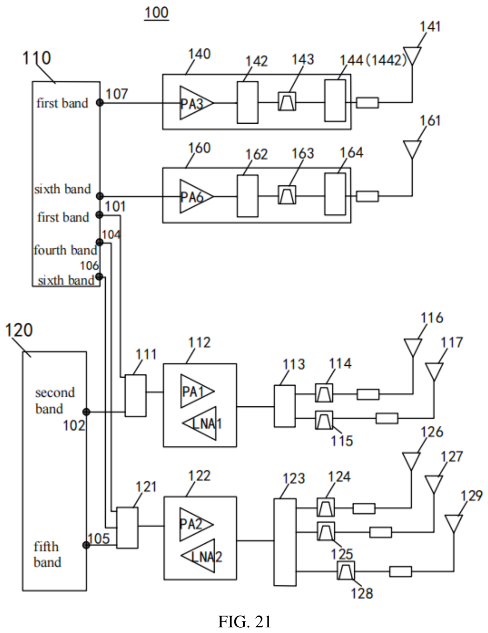

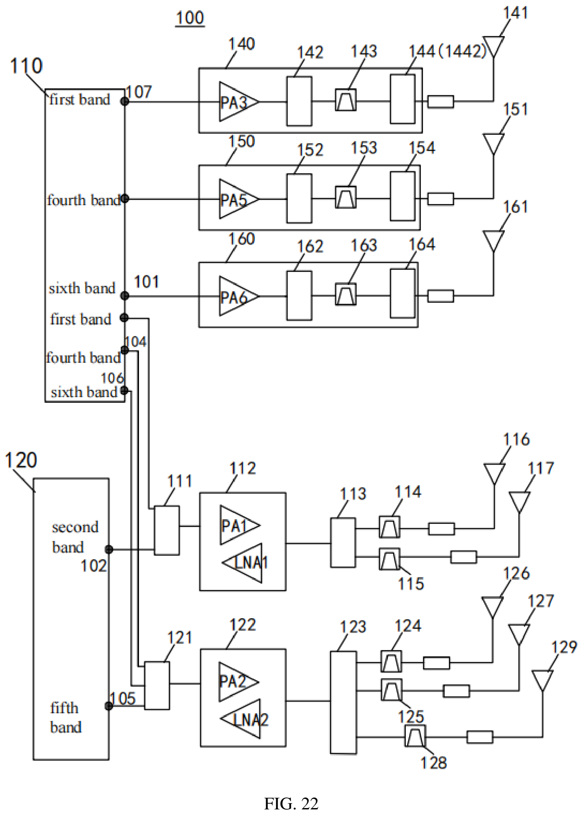

Referring to FIG. 21 and FIG. 22, the RF system 100 further includes a fifth front-end circuit 160 and a ninth antenna radiator 161. One terminal of the fifth front-end circuit 160 is electrically connected to the first RF transceiver module 110. The other terminal of the fifth front-end circuit 160 is electrically connected to the ninth antenna radiator 161. The fifth front-end circuit 160 is at least configured for transmission and receipt of the first network signal of the sixth frequency band.

Furthermore, the RF system 100 further includes a sixth filter 128 and a sixth antenna radiator 129 to support the sixth frequency band.

For example, the first frequency band is N41 band in HB, the second frequency band is Wi-Fi 2.4G band, the fourth frequency band is N79 band in UHB, the fifth frequency band is Wi-Fi 5G band, and the sixth frequency band is N78 band in UHB.

The fifth front-end circuit 160 and the ninth antenna radiator 161 form a resident antenna path supporting N78 band. The operating mode of N78 band may be single-input single-output or multiple-input multiple-output.

With reference to N41 band in the above embodiments, the third switch unit 121 and the fourth switch unit 123 are controlled to make the second front-end circuit 122 form a second antenna path for N78 band, which is conducive to a 2T4R (2 transmission antennas and 4 reception antennas) implementation for N78 band.

Further, in some alternative implementations, referring to FIG. 21 and FIG. 22, the fifth front-end circuit 160 includes a fifth power amplifier PA6, a fifth band selection switch 162, a fifth front-end filter 163, and a fifth front-end switch 164, which are electrically connected in sequence.

In some alternative implementations, the fifth power amplifier PA6 and at least one of the fifth band selection switch 162, the fifth front-end filter 163, and the fifth front-end switch 164 are integrated into one chip.

For example, the fifth front-end circuit 160 is a cellular mobile front-end circuit. The fifth power amplifier PA6, a fifth low noise amplifier, the fifth band selection switch 162, the fifth front-end filter 163, and the fifth front-end switch 164 in the fifth front-end circuit 160 are integrated into one chip, for example, an L-PAMiD chip. In this way, the fifth front-end circuit 160t has a high integration level.

Further, the fifth power amplifier PA6 includes at least one of an LB power amplifier, an MB power amplifier, and an HB power amplifier. In other words, the fifth front-end circuit 160 may integrate power amplifiers and low noise amplifiers for LB band, MB band, and HB band to realize the transmission and reception of signals in LB band, MB band, and HB band.

In some other alternative implementations, the fifth power amplifier PA6, the fifth band selection switch 162, the fifth front-end filter 163, and the fifth front-end switch 164 are independent components.

Specifically, the fifth power amplifier PA6, the fifth low noise amplifier, and the fifth band selection switch 162 of the fifth front-end circuit 160 are integrated into one chip. The fifth front-end filter 163 and the fifth front-end switch 164 are arranged outside the fifth front-end circuit 160. In this way, it is convenient to implement additional circuit architecture modifications around the periphery of the fifth front-end circuit 160.

In some alternative implementations, the fifth front-end switch 164 includes an antenna switch or a transfer switch.

In some alternative implementations, the antenna switch may perform switching between different antenna radiators of the same frequency band and further perform switching between different antenna radiators of different frequency bands. In some alternative implementations, the transfer switch may perform switching between different antenna radiators of the same frequency band.

In these embodiments, only five RF front-end circuits are needed to support switching between a combination of the first frequency band (e.g., N41 band in HB) + the second frequency band (e.g., Wi-Fi 2.4G band) and a 2T4R implementation of the first frequency band (e.g., N41 band in HB), support a combination of the sixth frequency band (e.g., N78 band in UHB)/the fifth frequency band (e.g., Wi-Fi 5G band)/the fourth frequency band (e.g., N79 band in UHB) + the fourth frequency band (e.g., N79 band in UHB), and support a combination of the sixth frequency band (e.g., N78 band in UHB)/the fifth frequency band (e.g., Wi-Fi 5G band)/the fourth frequency band (e.g., N79 band in UHB) + the sixth frequency band (e.g., N78 band in UHB), thereby forming more frequency band combinations.

Apparently, in some other embodiments, the fourth front-end circuit 150 may not be provided.

In some alternative implementations, the first RF transceiver module 110 is further configured for transmission and receipt of a first network signal of a seventh frequency band. The seventh frequency band includes parts of LB, MB, and HB excluding the first frequency band.

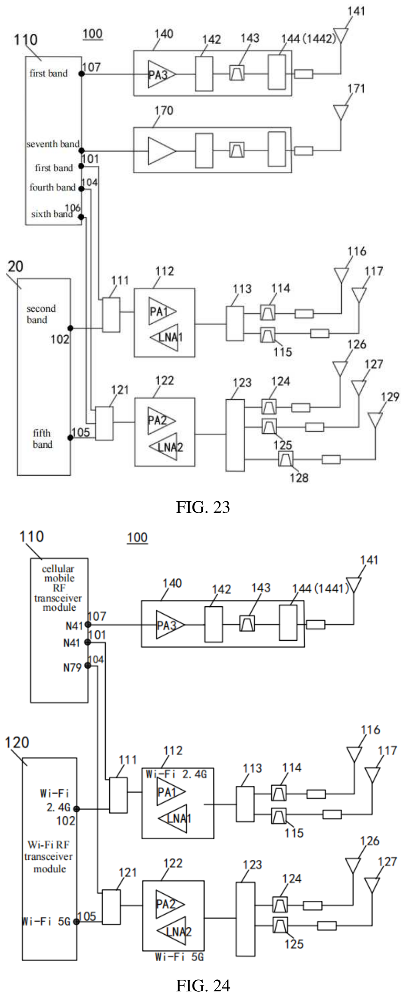

Referring to FIG. 23, the RF system 100 further includes a sixth front-end circuit 170 and a tenth antenna radiator 171. One terminal of the sixth front-end circuit 170 is electrically connected to the first RF transceiver module 110. The other terminal of the sixth front-end circuit 170 is electrically connected to the tenth antenna radiator 171. The tenth antenna radiator 171 is at least configured to transmit and receive the first network signal of the seventh frequency band. The seventh frequency band includes at least one of LB and MB.

The specific structure of the sixth front-end circuit 170 may refer to the structure of the fifth front-end circuit 160.

In these embodiments, in a case where the first filter 114 is integrated into the first front-end circuit 112 configured for Wi-Fi 2.4G band, the 2T4R implementation for LB, the 2T4R implementation for MB, and the 2T4R implementation for HB can be supported due to the sixth front-end circuit 170 and the third front-end circuit 140.

In some alternative implementations, the RF system 100 further includes a controller (not shown).

The controller is electrically connected to the first switch unit 111 and the second switch unit 113.

The controller is integrated into the first RF transceiver module 110, the second RF transceiver module 120, a modem, or a processor of the electronic device.

The controller is configured to, in a resident state, control the first switch unit 111 to make the second RF transceiver module 120 and the first front-end circuit 112 conductively connected, and control the second switch unit 113 to make the first front-end circuit 112 and the second filter 115 conductively connected. In other words, in the resident state, the second RF transceiver module 120, the first front-end circuit 112, the second filter 115, and the second antenna radiator 117 are conductively connected to support the second network signal, such as a signal in Wi-Fi 2.4G band. In this way, it facilitates the electronic device to support Wi-Fi signals.

The controller is further configured to, when a first condition is met, control the first switch unit 111 to make the first RF transceiver module 110 and the first front-end circuit 112 conductively connected, and control the second switch unit 113 to make the first front-end circuit 112 and the first filter 114 conductively connected.

The first condition includes any one of the following: a received signal strength of the first network signal (specifically the first frequency band) is less than or equal to a preset strength, a download speed of the first network signal (specifically the first frequency band) is greater than or equal to a preset speed, and a coverage range of the first network signal (specifically the first frequency band) is greater than or equal toa preset range.

Specifically, the first network signal is a cellular mobile signal, and the second network signal is a Wi-Fi signal.

When the RF system 100 detects that the received signal strength of the cellular mobile signal is less than or equal to the preset strength, for example, when the received signal strength of the cellular mobile signal is weak in a case where the electronic device is in a weak field such as an underground parking, the controller may control the first switch unit 111 and the second switch unit 113 to perform switching, so that the first front-end circuit 112 operates for the cellular mobile signal of the first frequency band. In view that the third front-end circuit 140 may also support the first frequency band, the operating mode of the first frequency band is set to the 2T4R implementation, so as to increase the strength of the cellular mobile signal when the electronic device is in the weak field such as the underground parking.

When the download speed of the first network signal is greater than or equal to the preset speed, that is, the electronic device has a high demand for download speed, the controller may control the first switch unit 111 and the second switch unit 113 to perform switching so that the first front-end circuit 112 operates for the cellular mobile signal of the first frequency band. In view that the third front-end circuit 140 may also support the first frequency band, the operating mode of the first frequency band is set to the 2T4R implementation, so as to increase the download speed of the electronic device.

When the coverage range of the first network signal is greater than or equal to the preset range, that is, the electronic device has a high demand for coverage range, the controller may control the first switch unit 111 and the second switch unit 113 to perform switching so that first front-end circuit 112 operates for the cellular mobile signal of the first frequency band. In view that the third front-end circuit 140 may also support the first frequency band, the operating mode of the first frequency band is set to the 2T4R implementation, so as to support the electronic device to quickly find the antenna with the optimal signal and switch to operate using the antenna with the optimal signal.

In some alternative implementations, the controller is further electrically connected to the third switch unit 121 and the fourth switch unit 123. When the first switch unit 111 makes the first RF transceiver module 110 and the first front-end circuit 112 conductively connected, the controller is further configured to control the third switch unit 121 to make the second RF transceiver module 120 and the second front-end circuit 122 conductively connected, and control the fourth switch unit 123 to make the second front-end circuit 122 and the fifth filter 125 conductively connected.

That is, when the first front-end circuit 112 operates for the cellular mobile signal, the second front-end circuit 122 may be switched to operate for the Wi-Fi signal, so that the electronic device may maintain supporting both cellular mobile signals and Wi-Fi signals.

The controller is configured to, in the resident state, control the third switch unit 121 to make the second RF transceiver module 120 and the second front-end circuit 122 conductively connected, and control the fourth switch unit 123 to make the second front-end circuit 122 and the fifth filter 125 conductively connected. In other words, in the resident state, the second RF transceiver module 120, the second front-end circuit 122, the fifth filter 125, and the fifth antenna radiator 127 are conductively connected to support the second network signal, such as Wi-Fi 5G. In this way, the electronic device may support Wi-Fi signals.

The controller is further configured to, when a second condition is met, control the third switch unit 121 to make the first RF transceiver module 110 and the second front-end circuit 122 conductively connected, and control the fourth switch unit 123 to make the second front-end circuit 122 and the fourth filter 124 conductively connected.

The second condition includes any one of the following: the received signal strength of the first network signal (specifically the fourth frequency band) is less than or equal to the preset strength, the download speed of the first network signal (specifically the fourth frequency band) is greater than or equal to the preset speed, and the coverage range of the first network signal (specifically the fourth frequency band) is greater than or equal to the preset range.

Specifically, the first network signal is a cellular mobile signal, and the second network signal is a Wi-Fi signal.

In some alternative implementations, when the third switch unit 121 makes the first RF transceiver module 110 and the second front-end circuit 122 conductively connected, the controller is further configured to control the first switch unit 111 to make the second RF transceiver module 120 and the first front-end circuit 112 conductively connected, and control the second switch unit 113 to make the first front-end circuit 112 and the second filter 115 conductively connected.

That is, when the second front-end circuit 122 operates for the cellular mobile signal, the first front-end circuit 112 may be switched to operate for the Wi-Fi signals to ensure that the electronic device may maintain supporting for both cellular mobile signals and Wi-Fi signals.

In a technology approach, the RF system 100 includes a cellular RF transceiver module, a short-range RF transceiver module (such as Wi-Fi, Bluetooth, NFC, and UWB), two cellular mobile RF front-end circuits (L-PAMiD), a RF front-end circuit (LPAF) for N79 band, a RF front-end circuit for Wi-Fi 2.4G band, a RF front-end circuit for Wi-Fi 5G band, and multiple front-end path insertion losses. The front-end path insertion loss includes an equivalent insertion loss generated by a combiner, a coupler, and a transmit-receive transfer antenna.

In another technology approach, the RF system 100 includes a cellular RF transceiver module, a short-range RF transceiver module (such as Wi-Fi, Bluetooth, NFC, and UWB), one cellular mobile L-PAMiD (for transmitting and receiving N41 band), one cellular mobile MMBPA (for transmitting and receiving N41 band), an N41 filter, an SRS transfer switch, an LPAF, a RF front-end circuit for Wi-Fi 2.4G band, a RF front-end circuit for Wi-Fi 5G band, and multiple front-end path insertion losses. N41 2Tx and N79 are supported according to these embodiments. To improve uplink coverage and rate, the network would schedule 2Tx requirements, that is, the same frequency band is supported by two transmission paths.

A basic operating principle is as follows.

When there is a need to improve the uplink rate in a case where a network signal has good quality, or there is a need to improve the uplink coverage range in a case where or the network quality is poor, the entire hardware circuit needs to support 2Tx. The N41 2Tx is taken as an example for illustration.

Two signals are output from the first port 101 and the seventh port 107 of the cellular mobile RF transceiver module respectively, and are input into two N41 transmission paths, such as 2 L-PAMiDs, or one PAMiD and one MMBPA. Finally, the signals are transmitted through the first antenna radiator 116 and the seventh antenna radiator 141. When a network-side device (e.g., a base station) activates N79 band, one signal is output from the fourth port 104 of the cellular mobile RF transceiver module, are input into the N79 LPAF transmitting path, and is finally transmitted through the fourth antenna radiator 126.

When the network-side device connects to Wi-Fi and activates Wi-Fi 2.4G band, one signal is output from the second RF transceiver module 120, is input into the transmitting path of the RF front-end circuit for Wi-Fi 2.4G band, and is finally transmitted through the second antenna radiator 117. When the network-side device connects to Wi-Fi and activates Wi-Fi 5G, one signal is output from the second RF transceiver module 120 and input into the transmitting path of the RF front-end circuit for Wi-Fi 5G band, and is finally transmitted through the fifth antenna radiator 127.

Referring to FIG. 14 to FIG. 17, in some alternative implementations, the second antenna radiator 117 and the fifth antenna radiator 127 may be combined to reuse the antenna radiator, thereby reducing the number of antenna radiators and saving antenna data. For another example, the fourth antenna radiator 126 and the second antenna radiator 117 are combined to reuse the antenna radiator, thereby reducing the number of antenna radiators and saving antenna data. For another example, the first antenna radiator 116 and the fifth antenna radiator 127 are combined to reuse the antenna radiator, thereby reducing the number of antenna radiators and saving antenna data. For another example, the first antenna radiator 116 and the fourth antenna radiator 126 are combined to reuse the antenna radiator, thereby reducing the number of antenna radiators and saving antenna data.

Conventional RF systems 100 use numerous hardware components and hardware paths, resulting in a high cost and a large occupied area. However, every inch on a main board of the mobile phone is precious, excessive RF paths would occupy a large area, and excessive power amplifiers would increase costs.

Referring to FIG. 24 to FIG. 25, in the embodiments of the disclosure, the RF front-end circuit for Wi-Fi 2.4G band (2.412-2.484 GHz) reuses the RF front-end circuit for N41 band (2.496-2.696 GHz), and the RF front-end circuit for Wi-Fi 5G band (5.15-5.85 GHz) reuses the RF front-end circuit for N79 band (4.4-5 GHz).

The operating principle of the embodiment of the disclosure is as follows.

When there is a need to improve the uplink rate in a case where a network signal has good quality, or when there is a need to improve the uplink coverage range in a case where the network quality is poor, the entire hardware circuit needs to support 2Tx. The N41 2Tx is taken as an example for illustration.

The signal from the seventh port 107 of the cellular mobile RF transceiver module is input into the N41 transmitting path, such as an L-PAMiD chip or an MMBPA chip, and is finally transmitted through the seventh antenna radiator 141.

The signal from the first port 101 of the cellular mobile RF transceiver module is directed, via the first switch unit 111, to the input terminal of the N41 RF front-end circuit. After passing through the RF front-end circuit, the signal from the output terminal is directed via the second switch unit 113 to the N41 filter, and finally transmitted through the first antenna radiator 116.

The signal from the second port 102 is directed, via the first switch unit 111, to the input terminal of the RF front-end circuit for Wi-Fi 2.4G band. After passing through the RF front-end circuit, the signal from the output terminal is directed, via the second switch unit 113, to the filter for Wi-Fi 2.4G band, and is finally transmitted through the second antenna radiator 117.

When the network-side device activates N79 band, the signal output from the fourth port 104 of the cellular mobile RF transceiver module is directed, via the third switch unit 121, to the input terminal of the RF front-end circuit for N79 band. After passing through the RF front-end circuit, the signal from the output terminal is directed, via the fourth switch unit 123, to the N79 filter, and is finally transmitted through the fourth antenna radiator 126.

When the network-side device connects to Wi-Fi and activates Wi-Fi 5G, the output of the short-range RF transceiver module is directed, via the third switch unit 121, to the transmitting path of the RF front-end circuit for Wi-Fi 5G band, and is finally transmitted through the fifth antenna radiator 127.

In the entire RF front-end solution described above, the aforementioned functions may be achieved with only three power amplifiers, which reduces the area and cost of the entire solution.

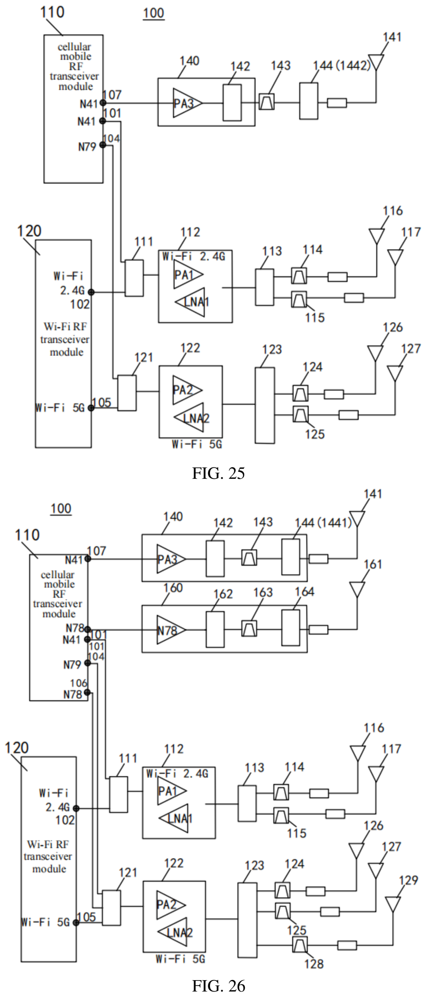

Referring to FIG. 26, in the embodiments of the disclosure, the RF front-end circuit for Wi-Fi 2.4G band is configured to output signals in N41 band, and Wi-Fi 2.4G band reuses N41 band; and the RF front-end circuit for Wi-Fi 5G band is configured to output signals in N79 band, and Wi-Fi 5G band reuses N79 band. Alternatively, the L-PAMiD is configured to output signals in Wi-Fi 2.4G band, and the L-PAMiD reuses Wi-Fi 2.4G band; and the LPAF is configured to output signals in Wi-Fi 5G band, and the LPAF reuses Wi-Fi 5G band. Using the RF front-end circuits of one L-PAMiD or MMBPA+ Wi-Fi 2.4G band+ Wi-Fi 5G band realizes the functions of the original solution, significantly reducing the area of the mobile phone's main board. In this way, there is no need for an additional N41 L-PAMiD and N79 band LAPF, which significantly reduces the application cost of components and the area occupied by components.

Further, the sixth port 106 of the first RF transceiver module 110 is electrically connected to the third switch unit 121, and the second front-end circuit 122 is also electrically connected to the sixth filter 128 and the sixth antenna radiator 129 of N78 band through the fourth switch unit 123. Specifically, the N79 band LPAF and the N78 band LPAF share one package and are integrated into one chip. In the case where the second front-end circuit 122 is the RF front-end circuit for Wi-Fi 5G band, the frequency response BW2 of the second power amplifier PA2 is 3.3-5.85 GHz.

The RF system 100 further includes the fourth front-end circuit 150 for supporting N78 band. When both N41 band and N78 band need to support 2Tx, four PAs are provided in these embodiments. Seven PAs are required according to conventional solutions, but only four PAs are needed to realize the functions of the original solution in these embodiments.

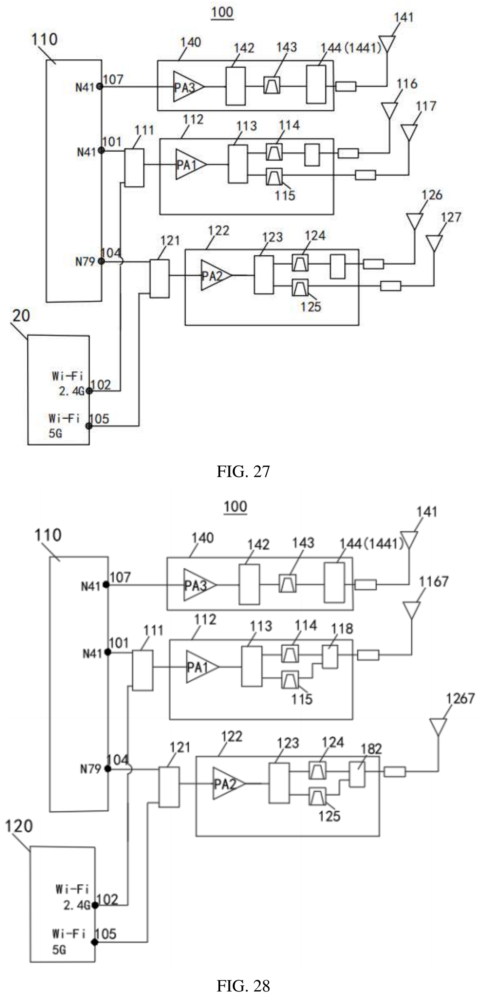

Referring to FIG. 27 and FIG. 28, apparently, the first front-end circuit 112 may also be a cellular mobile RF front-end circuit, and the filter for Wi-Fi 2.4G band and the first front-end circuit 112 are integrated into one chip. Further, the first antenna radiator 116 and the second antenna radiator 117 may be the same antenna radiator, and each of the first filter 114 and the second filter 115 may be conductively connected, via the first antenna switch 118, to the same antenna radiator.

Referring to FIG. 27 and FIG. 28, apparently, the second front-end circuit 122 may also be a cellular mobile (N79 band) RF front-end circuit, and the filter for Wi-Fi 5G band and the second front-end circuit 122 are integrated into one chip. Further, the fourth antenna radiator 126 and the fifth antenna radiator 127 may be the same antenna radiator, and each of the fourth filter 124 and the fifth filter 125 may be conductively connected, via the second antenna switch 182, to the same antenna radiator.

Although the embodiments of the disclosure have been shown and described above, it may be understood that the above embodiments are exemplary rather than being construed as a limitation on the disclosure. A person skilled in the art may make changes, modifications, substitutions and variations to the above embodiments without departing from the scope of the disclosure, and these improvements and modifications are also regarded as falling within the protection scope of the disclosure.

## Claims

1. A radio frequency system (100), comprising:
a first radio frequency transceiver module (110), configured for transmission and receipt of a first network signal of a first frequency band;
a second radio frequency transceiver module (120), configured for transmission and receipt of a second network signal of a second frequency band;
a first switch unit (111), two selection terminals of the first switch unit (111) being electrically connected to the first radio frequency transceiver module (110) and the second radio frequency transceiver module (120) respectively;
a first front-end circuit (112), one terminal of the first front-end circuit (112) being electrically connected to a fixed terminal of the first switch unit (111);
a second switch unit (113), one terminal of the second switch unit (113) being electrically connected to the other terminal of the first front-end circuit (112);
a first filter (114), one terminal of the first filter (114) being electrically connected to a first selection terminal of the second switch unit (113), and the first filter (114) being configured to allow the first network signal of the first frequency band to pass through;
a second filter (115), one terminal of the second filter (115) being electrically connected to a second selection terminal of the second switch unit (113), and the second filter (115) being configured to allow the second network signal of the second frequency band to pass through;
a first antenna radiator (116), the first antenna radiator (116) being electrically connected to the other terminal of the first filter (114), and the first antenna radiator (116) being configured to transmit and receive the first network signal of the first frequency band; and
a second antenna radiator (117), the second antenna radiator (117) being electrically connected to the other terminal of the second filter (115), and the second antenna radiator (117) being configured to transmit and receive the second network signal of the second frequency band.

2. The radio frequency system (100) as claimed in claim 1, wherein the first front-end circuit (112) comprises a first power amplifier (PA1), and a frequency response range of the first power amplifier (PA1) covers the first frequency band and the second frequency band; and the first power amplifier (PA1) is configured to amplify the first network signal or the second network signal.

3. The radio frequency system (100) as claimed in claim 1, wherein a difference between a center frequency of the first frequency band and a center frequency of the second frequency band is less than or equal to a first preset frequency band; and
wherein the first network signal comprises a cellular mobile signal, and the second network signal comprises a short-range signal; and
wherein the first frequency band comprises at least one of high bands, and the second frequency band comprises a Wi-Fi 2.4G band; or wherein the first frequency band comprises at least one of ultra high bands, and the second frequency band comprises a Wi-Fi 5G band.

4. The radio frequency system (100) as claimed in any one of claims 1 to 3, wherein the first antenna radiator (116) and the second antenna radiator (117) are a same radiator referred to as a first radiator (1167), the radio frequency system (100) further comprises a first antenna switch (118), selection terminals of the first antenna switch (118) are connected to the first filter (114) and the second filter (115) respectively, and a fixed terminal of the first antenna switch (118) is electrically connected to the first radiator (1167).

5. The radio frequency system (100) as claimed in any one of claims 1 to 3, wherein the first radio frequency transceiver module (110) is further configured for transmission and receipt of a first network signal of a third frequency band;
the radio frequency system (100) further comprises a third filter (1180) and a third antenna radiator (119), one terminal of the third filter (1180) is electrically connected to a third selection terminal of the second switch unit (113), and the third filter (1180) is configured to allow the first network signal of the third frequency band to pass through; and
the third antenna radiator (119) is electrically connected to the other terminal of the third filter (1180), and the third antenna radiator (119) is configured to transmit and receive the first network signal of the third frequency band.

6. The radio frequency system (100) as claimed in any one of claims 1 to 4, wherein the first radio frequency transceiver module (110) is further configured for transmission and receipt of a first network signal of a fourth frequency band, and the second radio frequency transceiver module (120) is further configured for transmission and receipt of a second network signal of a fifth frequency band; and
the radio frequency system (100) further comprises:
a third switch unit (121), two selection terminals of the third switch unit (121) being electrically connected to the first radio frequency transceiver module (110) and the second radio frequency transceiver module (120) respectively;
a second front-end circuit (122), one terminal of the second front-end circuit (122) being electrically connected to a fixed terminal of the third switch unit (121);
a fourth switch unit (123), one terminal of the fourth switch unit (123) being electrically connected to the other terminal of the second front-end circuit (122);
a fourth filter (124), one terminal of the fourth filter (124) being electrically connected to a first selection terminal of the fourth switch unit (123), and the fourth filter (124) being configured to allow the first network signal of the fourth frequency band to pass through;
a fifth filter (125), one terminal of the fifth filter (125) being electrically connected to a second selection terminal of the fourth switch unit (123), and the fifth filter (125) being configured to allow the second network signal of the fifth frequency band to pass through;
a fourth antenna radiator (126), the fourth antenna radiator (126) being electrically connected to the other terminal of the fourth filter (124), and the fourth antenna radiator (126) being configured to transmit and receive the first network signal of the fourth frequency band; and
a fifth antenna radiator (127), the fifth antenna radiator (127) being electrically connected to the other terminal of the fifth filter (125), and the fifth antenna radiator (127) being configured to transmit and receive the second network signal of the fifth frequency band.

7. The radio frequency system (100) as claimed in claim 6, wherein the second front-end circuit (122) comprises a second power amplifier (PA2), and a frequency response range of the second power amplifier (PA2) covers the fourth frequency band and the fifth frequency band; and the second power amplifier (PA2) is configured to amplify the first network signal of the fourth frequency band or the second network signal of the fifth frequency band; and/or
wherein the first network signal comprises a cellular mobile signal, and the second network signal comprises a short-range signal; and the first frequency band comprises at least one of high bands, the second frequency band comprises a Wi-Fi 2.4G band, the fourth frequency band comprises at least one of ultra high bands, and the fifth frequency band comprises a Wi-Fi 5G band.

8. The radio frequency system (100) as claimed in claim 6 or 7, wherein the first radio frequency transceiver module (110) is further configured for transmission and receipt of a first network signal of a sixth frequency band, and the radio frequency system (100) further comprises:
a sixth filter (128), one terminal of the sixth filter (128) being electrically connected to a third selection terminal of the fourth switch unit (123), and the sixth filter (128) being configured to allow the first network signal of the sixth frequency band to pass through; and
a sixth antenna radiator (129), the sixth antenna radiator (129) being electrically connected to the other terminal of the sixth filter (128), and the sixth antenna radiator (129) being configured to transmit and receive the first network signal of the sixth frequency band; and
preferably, the radio frequency system (100) further comprises a fifth front-end circuit (160) and a ninth antenna radiator (161), wherein one terminal of the fifth front-end circuit (160) is electrically connected to the first radio frequency transceiver module (110), the other terminal of the fifth front-end circuit (160) is electrically connected to the ninth antenna radiator (161), and the fifth front-end circuit (160) is at least configured to transmit and receive the first network signal of the sixth frequency band; and
preferably, the first front-end circuit (112) and at least one of the first switch unit (111), the second switch unit (113), the first filter (114), and the second filter (115) are integrated into one chip, or the first front-end circuit (112), the first switch unit (111), the second switch unit (113), the first filter (114), and the second filter (115) are independent components; and/or the second front-end circuit (122) and at least one of the third switch unit (121), the fourth switch unit (123), the fourth filter (124), and the fifth filter (125) are integrated into one chip, or the second front-end circuit (122), the third switch unit (121), the fourth switch unit (123), the fourth filter (124), and the fifth filter (125) are independent components.

9. The radio frequency system (100) as claimed in any one of claims 1 to 8, further comprising a third front-end circuit (140) and a seventh antenna radiator (141), wherein one terminal of the third front-end circuit (140) is electrically connected to the first radio frequency transceiver module (110), the other terminal of the third front-end circuit is electrically connected to the seventh antenna radiator (141), and the third front-end circuit (140) is at least configured to transmit and receive the first network signal of the first frequency band; and
wherein the third front-end circuit (140) comprises a third power amplifier (PA3), a third band selection switch (142), a third front-end filter (143), and a third front-end switch (144) electrically connected in sequence; the third power amplifier (PA3) and at least one of the third band selection switch (142), the third front-end filter (143), and the third front-end switch (144) are integrated into one chip; and the third front-end switch (144) comprises an antenna switch (1441) or a transfer switch (1442).

10. The radio frequency system (100) as claimed in any one of claims 1 to 8, further comprising a fourth front-end circuit (150) and an eighth antenna radiator (151), wherein one terminal of the fourth front-end circuit (150) is electrically connected to the first radio frequency transceiver module (110), the other terminal of the fourth front-end circuit (150) is electrically connected to the eighth antenna radiator (151), and the fourth front-end circuit (150) is at least configured to transmit and receive the first network signal of the fourth frequency band.

11. The radio frequency system (100) as claimed in any one of claims 1 to 10, wherein the first radio frequency transceiver module (110) is further configured for transmission and receipt of a first network signal of a seventh frequency band; and
the radio frequency system (100) further comprises a sixth front-end circuit (170) and a tenth antenna radiator (171), one terminal of the sixth front-end circuit (170) is electrically connected to the first radio frequency transceiver module (110), the other terminal of the sixth front-end circuit (170) is electrically connected to the tenth antenna radiator (171), the tenth antenna radiator (171) is at least configured to transmit and receive the first network signal of the seventh frequency band, and the seventh frequency band comprises at least one of a low band and a mid band.

12. The radio frequency system (100) as claimed in any one of claims 1 to 11, wherein the fourth antenna radiator (126) and the fifth antenna radiator (127) are a same radiator referred to as a second radiator (1267); and the radio frequency system (100) further comprises a second antenna switch (182), selection terminals of the second antenna switch (182) are connected to the fourth filter (124) and the fifth filter (125) respectively, and a fixed terminal of the second antenna switch (182) is electrically connected to the second radiator (1267).

13. The radio frequency system (100) as claimed in any one of claims 1 to 11, wherein the second antenna radiator (117) and the fifth antenna radiator (127) are a same radiator referred to as a first sub-radiator (130), the radio frequency system (100) further comprises a first combiner (192), one side of the first combiner (192) is electrically connected to the second filter (115) and the fifth filter (125), and the other side of the first combiner (192) is electrically connected to the first sub-radiator (130); and/or
the second antenna radiator (117) and the fourth antenna radiator (126) are a same radiator referred to as a second sub-radiator (132), the radio frequency system (100) further comprises a second combiner (131), one side of the second combiner (131) is electrically connected to the second filter (115) and the fourth filter (124), and the other side of the second combiner (131) is electrically connected to the second sub-radiator (132); and/or
the first antenna radiator (116) and the fifth antenna radiator (127) are a same radiator referred to as a third sub-radiator (134), the radio frequency system (100) further comprises a third combiner (133), one side of the third combiner (133) is electrically connected to the first filter (114) and the fifth filter (125), and the other side of the third combiner (133) is electrically connected to the third sub-radiator (134); and/or
the first antenna radiator (116) and the fourth antenna radiator (126) are a same radiator referred to as a fourth sub-radiator (136), the radio frequency system (100) further comprises a fourth combiner (135), one side of the fourth combiner (135) is electrically connected to the first filter (114) and the fourth filter (124), and the other side of the fourth combiner (135) is electrically connected to the fourth sub-radiator (136).

14. The radio frequency system (100) as claimed in any one of claims 1 to 13, further comprising:
a controller, wherein the controller is electrically connected to the first switch unit (111) and the second switch unit (113), and the controller is configured to, in a resident state, control the first switch unit (111) to make the second radio frequency transceiver module (120) and the first front-end circuit (112) conductively connected, and control the second switch unit (113) to make the first front-end circuit (112) and the second filter (115) conductively connected; and
the controller is further configured to, when a first condition is met, control the first switch unit (111) to make the first radio frequency transceiver module (110) and the first front-end circuit (112) conductively connected, and control the second switch unit (113) to make the first front-end circuit (112) and the first filter (114) conductively connected; wherein the first condition comprises any one of: a received signal strength of the first network signal is less than or equal to a preset strength, a download speed of the first network signal is greater than or equal to a preset speed, and a coverage range of the first network signal is greater than or equal to a preset range;
wherein the controller is further electrically connected to the third switch unit (121) and the fourth switch unit (123), and the controller is further configured to control the third switch unit (121) to make the second radio frequency transceiver module (120) and the second front-end circuit (122) conductively connected, and control the fourth switch unit (123) to make the second front-end circuit (122) and the second filter (115) conductively connected, when the first switch unit (111) makes the first radio frequency transceiver module (110) and the first front-end circuit (112) conductively connected.

15. An electronic device (1000), comprising the radio frequency system (100) as claimed in any one of claims 1 to 14.
